# EUROPÄISCHE PATENTSCHRIFT

(11) **EP 4 725 105 B1**
(45) Veröffentlichungstag und Bekanntmachung des Hinweises auf die Patenterteilung: **21.10.2026**
(21) Anmeldenummer: 24731583.1
(22) Anmeldetag: 07.06.2024
(51) Int. Cl.: H02M 1/00, H02M 3/156, H02M 3/00

(54) **VERFAHREN ZUM BETREIBEN EINES GLEICHSPANNUNGSWANDLERS SOWIE GLEICHSPANNUNGSWANDLER**
METHOD FOR OPERATING A DC-DC CONVERTER, AND DC-DC CONVERTER
PROCÉDÉ DE FONCTIONNEMENT D'UN CONVERTISSEUR CONTINU-CONTINU AINSI QUE CONVERTISSEUR CONTINU-CONTINU

(30) Priorität: 07.06.2023 EP 23178051
(43) Veröffentlichungstag der Anmeldung: 15.04.2026
(73) Patentinhaber: FRONIUS INTERNATIONAL GmbH, 4643 Pettenbach (AT)
(72) Erfinder: GRASBÖCK, Richard, 4643 Pettenbach (AT); KREUZER, Harald, 4643 Pettenbach (AT); PAMER, Andreas, 4643 Pettenbach (AT); PIRCHENFELLNER, Jürgen, 4643 Pettenbach (AT)
(74) Vertreter: SONN Patentanwälte GmbH & Co KG
(86) Internationale Anmeldenummer: PCT/EP2024/065686
(87) Internationale Veröffentlichungsnummer: WO 2024/251924

(56) Entgegenhaltungen:
- WO-A2-2009/040691
- FU-ZEN CHEN ET AL: "Digital Control for Improved Efficiency and Reduced Harmonic Distortion Over Wide Load Range in Boost PFC Rectifiers", IEEE TRANSACTIONS ON POWER ELECTRONICS, INSTITUTE OF ELECTRICAL AND ELECTRONICS ENGINEERS, USA, vol. 25, no. 10, 1 October 2010 (2010-10-01), pages 2683 - 2692, XP011309357, ISSN: 0885-8993
- ZHANG JIANTAO ET AL: "Model-Based Control for Grid-Tied Inverters Operated in Discontinuous Current Mode With Low Harmonic Current Distortion", IEEE TRANSACTIONS ON POWER ELECTRONICS, INSTITUTE OF ELECTRICAL AND ELECTRONICS ENGINEERS, USA, vol. 35, no. 10, 6 March 2020 (2020-03-06), pages 11167 - 11180, XP011796571, ISSN: 0885-8993, [retrieved on 20200629], DOI: 10.1109/TPEL.2020.2978871

## Beschreibung

Die Erfindung betrifft ein Verfahren nach Anspruch 1 zum Betreiben eines Gleichspannungswandlers, nämlich eines Hochsetzstellers, der bei einem Wechselrichter eingesetzt wird, wobei der Wechselrichter an eine Photovoltaikanlage angeschlossen ist und der Gleichspannungswandler in einem lückenden Betrieb betrieben wird und folgendes aufweist:
- eine Eingangsseite, an der eine Eingangsspannung anliegt und ein Eingangsstrom fließt,
- eine Ausgangsseite, an der eine Ausgangsspannung anliegt und ein Ausgangsstrom fließt,
- zumindest einen ansteuerbaren Schalter, der gemäß einem periodischen Schaltmuster mit einer Periodendauer derart geschaltet wird, dass die Eingangsspannung in die Ausgangsspannung gewandelt wird und die Ausgangsspannung einem Ausgangsspannungssollwert entspricht, und
- zumindest ein Induktivitätsbauelement,
wobei zumindest eine elektrische Größe des Gleichspannungswandlers, nämlich ein Strom durch das Induktivitätsbauelement, zumindest zeitweise eine Schwingung aufgrund des lückenden Betriebs aufweist, die durch eine Anregung eines aus dem Induktivitätsbauelement und einer parasitären Kapazität gebildeten Schwingkreises entsteht, wobei die Schwingung beginnt, nachdem der Strom durch das Induktivitätsbauelement seinen Nulldurchgang erreicht.

Des Weiteren betrifft die Erfindung einen Wechselrichter nach Anspruch 10 für eine Photovoltaikanlage, wobei der Wechselrichter einen Gleichspannungswandler beinhaltet, nämlich einen Hochsetzsteller, der folgendes aufweist:
- eine Eingangsseite für eine Eingangsspannung und einen Eingangsstrom,
- eine Ausgangsseite für eine Ausgangsspannung und einen Ausgangsstrom,
- zumindest einen ansteuerbaren Schalter,
- zumindest ein Induktivitätsbauelement, und
- eine Steuer- und/oder Regelungseinrichtung, die dazu eingerichtet ist, den Gleichspannungswandler in einem lückenden Betrieb zu betreiben und den Schalter gemäß einem periodischen Schaltmuster mit einer Periodendauer derart zu schalten, dass die Eingangsspannung in die Ausgangsspannung gewandelt wird und die Ausgangsspannung einem Ausgangsspannungssollwert entspricht,
wobei zumindest eine elektrische Größe des Gleichspannungswandlers, nämlich ein Strom durch das Induktivitätsbauelement, im Betrieb des Gleichspannungswandlers zumindest zeitweise eine Schwingung aufgrund des lückenden Betriebs aufweist, die durch eine Anregung eines aus dem Induktivitätsbauelement und einer parasitären Kapazität gebildeten Schwingkreises entsteht, wobei die Schwingung beginnt, nachdem der Strom durch das Induktivitätsbauelement seinen Nulldurchgang erreicht.

Gleichspannungswandler (engl. DC-DC Converter) werden dazu verwendet, eine an der Eingangsseite des Gleichspannungswandlers anliegende elektrische Eingangsspannung auf ein höheres oder niedrigeres Niveau an der Ausgangsseite zu wandeln. Um die Eingangsspannung zu wandeln, werden typischerweise elektrische Speicherelemente wie Induktivitätsbauelemente oder Kapazitätsbauelemente mit Hilfe von elektrischen Schaltern periodisch mit elektrischer Energie beladen und entladen und dadurch, je nach Wandlertopologie, ein höheres oder niedrigeres Spannungsniveau an der Ausgangsseite erzielt. Gleichspannungswandler, die auf diesem Funktionsprinzip basieren, werden auch als geschaltete Gleichspannungswandler bezeichnet. Bekannte Topologien von geschalteten Gleichspannungswandlern sind Tiefsetzsteller (engl. Buck Converter), Hochsetzsteller (engl. Boost Converter) und Auf-/Abwärtswandler (engl. Buck-Boost Converter).

Um höhere elektrische Leistungen umsetzen zu können, werden bei den meisten geschalteten Gleichspannungswandlern Induktivitätsbauelemente als Speicherelemente eingesetzt. Induktivitätsbauelemente wirken Stromänderungen nach Schaltvorgängen durch die Abgabe gespeicherter elektrischer Energie entgegen. Bei der Abgabe elektrischer Energie wird die Spannung am Induktivitätsbauelement verändert, was, je nach Wandlertopologie, zur Herauf- oder Herabsetzung der Ausgangsspannung gegenüber der Eingangsspannung genutzt wird.

Durch den Einsatz eines oder mehrerer elektrischer Speicherelemente liegt in einem Gleichspannungswandler ein elektrischer Schwingkreis vor, der durch die periodischen Schaltvorgänge des Schalters angeregt wird und dadurch die elektrischen Größen des Gleichspannungswandlers beeinflussen kann. Dies kann zu Schaltverlusten oder Abweichungen der Ausgangsspannung bzw. des Ausgangsstromes von entsprechenden Sollwerten führen. Auch wenn bei einem Gleichspannungswandler nur ein einziges Speicherelement eingesetzt wird, kann dennoch ein Schwingkreis mit parasitären Kapazitäten oder parasitären Induktivitätsbelägen gebildet werden, der die elektrischen Größen des Gleichspannungswandlers beeinflusst. Parasitäre Kapazitäten können beispielsweise durch Kapazitäten in dem Schalter, Kapazitäten in Wicklungen oder in einem allfälligen Diodenbauelement gebildet werden.

Die Schwingungen eines angeregten Schwingkreises beeinflussen die elektrischen Größen eines Gleichspannungswandlers je nach Wandlertopologie und Betriebsmodus unterschiedlich stark. Ein Beispiel, bei dem die Schwingungen eines Schwingkreises besonders starke Auswirkungen haben, ist der lückende bzw. diskontinuierliche Betrieb (engl. Discontinuous Mode) eines Aufwärtswandlers. Hierbei beginnen der elektrische Strom durch das Induktivitätsbauelement und die an dem Schalter abfallende elektrische Spannung nach dem Öffnen des Schalters zu schwingen, sobald der Strom seinen Nulldurchgang erreicht. Nach dem Schließen des Schalters wird die Schwingung des Stromes zwar beendet, allerdings steigt der Strom durch das Induktivitätsbauelement aufgrund der vorherigen Schwingung und des damit verbundenen zufälligen Startwertes anschließend auf einen unbekannten Wert. Darüber hinaus führt die Schwingung der an dem Schalter abfallenden elektrischen Spannung zu erhöhten Schaltverlusten.

Aus dem Stand der Technik ist bekannt, eine zusätzliche Sensorik einzusetzen, um unerwünschte Schwingungen detektieren zu können. Aus US 2021/0376734 A1 ist beispielsweise ein Sperrwandler bekannt, bei dem mithilfe einer Detektionsschaltung ein Minimum einer Schwingung gemessen wird. Bei dem Sperrwandler der US 2021/0376734 A1 und dem zugehörigen Verfahren wird die Schaltfrequenz des Sperrwandlers verändert und bleibt daher nicht konstant.

Aus der WO 2009/040691 A1 ist ein Gleichspannungswandler bekannt, bei dem Schaltzeiten zweier Transistoren synchronisiert werden, um Schaltverluste zu vermeiden.

Weitere Gleichspannungswandler, bei denen Schaltzeiten angepasst werden, sind aus den Veröffentlichungen
- FU-ZEN CHEN ET AL: "Digital Control for Improved Efficiency and Reduced Harmonic Distortion Over Wide Load Range in Boost PFC Rectifiers", IEEE TRANSACTIONS ON POWER ELECTRONICS, INSTITUTE OF ELECTRICAL AND ELECTRONICS ENGINEERS, USA, Bd. 25, Nr. 10, 1. Oktober 2010 (2010-10-01), Seiten 2683-2692, sowie
- ZHANG JIANTAO ET AL: "Model-Based Control for Grid-Tied Inverters Operated in Discontinuous Current Mode With Low Harmonic Current Distortion", IEEE TRANSACTIONS ON POWER ELECTRONICS, INSTITUTE OF ELECTRICAL AND ELECTRONICS ENGINEERS, USA, Bd. 35, Nr. 10, 6. März 2020 (2020-03-06), Seiten 11167-11180
bekannt.

Ein Nachteil bei den Vorrichtungen und Verfahren aus dem Stand der Technik ist, dass zusätzliche Sensoren an Stellen eingesetzt werden müssen, mit denen die angeregte Schwingung eines Schwingkreises erfassbar ist. Zusätzliche Sensoren sind jedoch teuer und erhöhen den Schaltungsaufwand. Durch die Messung kann zudem nur auf aktuelle Ereignisse reagiert werden, weshalb die aus dem Stand der Technik bekannten Vorrichtungen und Verfahren nur eingeschränkte Regelungs- bzw. Steuerungsmöglichkeiten erlauben.

Im Lichte dieser Ausführungen ist es Aufgabe der vorliegenden Erfindung die Nachteile des Standes der Technik zumindest teilweise oder vollständig zu lindern. Vorzugsweise ist es Aufgabe der vorliegenden Erfindung, ein Verfahren und einen Gleichspannungswandler der eingangs erwähnten Art zur Verfügung zu stellen, bei denen unerwünschte Schwingungen von elektrischen Größen bei Schaltvorgängen ohne direkte Messung berücksichtigt und kompensiert werden können, um beispielsweise die Regelung des Gleichspannungswandlers zu verbessern und/oder Schaltverluste zu minimieren.

Gelöst wird diese Aufgabe durch ein Verfahren zum Betreiben eines Gleichspannungswandlers nach Anspruch 1 und durch einen Wechselrichter nach Anspruch 10.

Anspruch 1 betrifft ein Verfahren zum Betreiben eines Gleichspannungswandlers, nämlich eines Hochsetzstellers, der bei einem Wechselrichter eingesetzt wird, wobei der Wechselrichter an eine Photovoltaikanlage angeschlossen ist und der Gleichspannungswandler in einem lückenden Betrieb betrieben wir. Das erfindungsgemäße Verfahren weist folgendes auf:
- eine Eingangsseite, an der eine Eingangsspannung anliegt und ein Eingangsstrom fließt,
- eine Ausgangsseite, an der eine Ausgangsspannung anliegt und ein Ausgangsstrom fließt,
- zumindest einen ansteuerbaren Schalter, der gemäß einem periodischen Schaltmuster mit einer Periodendauer derart geschaltet wird, dass die Eingangsspannung in die Ausgangsspannung gewandelt wird und die Ausgangsspannung einem Ausgangsspannungssollwert entspricht, und
- zumindest ein Induktivitätsbauelement,
wobei zumindest eine elektrische Größe des Gleichspannungswandlers, nämlich ein Strom durch das Induktivitätsbauelement, zumindest zeitweise eine Schwingung aufgrund des lückenden Betriebs aufweist, die durch eine Anregung eines aus dem Induktivitätsbauelement und einer parasitären Kapazität gebildeten Schwingkreises entsteht, wobei die Schwingung beginnt, nachdem der Strom durch das Induktivitätsbauelement seinen Nulldurchgang erreicht,
wobei ein zeitlicher Verlauf der Schwingung mithilfe eines mathematischen Modells des Gleichspannungswandlers oder Teile des Gleichspannungswandlers berechnet wird und das Schaltmusters auf Basis des berechneten zeitlichen Verlaufs der Schwingung angepasst wird, sodass zumindest ein Schaltzeitpunkt des Schaltmusters mit einer vorgegebenen Phase der Schwingung zusammenfällt,
wobei der zumindest eine Schaltzeitpunkt des Schaltmusters unter Beibehaltung der Periodendauer des Schaltmusters angepasst wird,
wobei in der vorgegebenen Phase der Strom durch das Induktivitätsbauelement einen vorgegebenen Sollwert derart aufweist, dass der Strom durch das Induktivitätsbauelement zu Beginn eines anschließenden Stromanstiegs mit einer bekannten Steigung zu einem Schaltzeitpunkt zum Schließen des Schalters einen vorgegebenen Wert annimmt,
wobei das Schaltmuster eine Frequenz zwischen 20 kHz und 150 kHz aufweist und durch zeitliches Verschieben eines Schaltzeitpunktes zum Öffnen des Schalters derart angepasst wird, dass der Schalter in der vorgegebenen Phase der Schwingung geschlossen wird.

Nachfolgend wird die Erfindung anhand einer Schwingung in einem Strom und/oder in einer Spannung beschrieben. Bei der beanspruchten Erfindung ist vorgesehen, dass die Schwingung zumindest in dem Strom enthalten ist und in der vorgegebenen Phase der Strom durch das Induktivitätsbauelement einen vorgegebenen Sollwert aufweist.

Vorteilhafterweise kann die Schwingung, die in elektrischen Größen des Gleichspannungswandlers, wie beispielsweise der an den Schalter abfallenden elektrischen Spannung und/oder dem elektrischen Strom durch das Induktivitätsbauelement, enthalten sein kann, bei den Schaltvorgängen des Schalters berücksichtigt und dadurch ihr negativer Einfluss kompensiert werden. Die vorgegebene Phase kann dabei so gewählt werden, dass eine von der Schwingung betroffene elektrischen Größe zu dem zumindest einen Schaltzeitpunkt vorgegebene Werte annimmt. Mit anderen Worten kann der Schalter geschaltet werden, wenn eine elektrische Größe, die die Schwingung aufweist, einen vorgegebenen Wert aufweist. Zum Beispiel kann die vorgegebene Phase so gewählt werden, dass der elektrische Strom durch das Induktivitätsbauelement oder die an dem Schalter abfallende elektrische Spannung beim Öffnen und/oder Schließen des Schalters einen vorgegebenen Wert annimmt. Bei der Erfindung wird insbesondere durch eine Steuerung und/oder Regelung erreicht, dass der zumindest eine Schaltzeitpunkt mit der vorgegebenen Phase zusammenfällt. In der Praxis kann es jedoch, wie dies im Allgemeinen bei Steuerungen und Regelungen der Fall ist, aufgrund von einwirkenden Störgrößen, Messfehlern und Toleranzen zu Abweichungen zwischen dem zumindest einen Schaltzeitpunkt und der vorgegebenen Phase kommen. Insofern kann die Erfindung auch dadurch beschrieben werden, dass der zumindest eine Schaltzeitpunkt der vorgegebenen Phase der Erfindung angenähert wird. Die Schwingung kann näherungsweise als sinusförmig angenommen werden. Die vorgegebene Phase der Schwingung kann beispielsweise durch einen Phasenwinkel und/oder eine Amplitude ausgedrückt werden. Als Phase kann beispielsweise bei einer trigonometrischen Funktion, vorzugsweise einer Cosinus- oder Sinusfunktion, das Argument ωt + φ₀ bezeichnet werden, wobei ω eine Frequenz, t eine Zeit und φ₀ einen Nullphasenwinkel bezeichnet. Je nachdem, ob die Schwingung in einem Strom oder einer Spannung enthalten ist, kann die Schwingung eine unterschiedliche Phasenlage aufweisen, was bei der Ermittlung des zeitlichen Verlaufs der Schwingung und der vorgegebenen Phase der Schwingung berücksichtigt werden kann. Die vorgegebene Phase kann von einer Steuer- und/oder Regelungseinrichtung vorgegeben werden. Der zumindest eine Schaltzeitpunkt des Schaltmusters kann in jeder Periode des Schaltmusters angepasst, d.h. zeitlich nach vorne oder nach hinten verschoben, werden, sodass in jeder Periode der zumindest eine Schaltzeitpunkt des Schaltmusters mit einer vorgegeben Phase der Schwingung zusammenfällt. Bei dem zumindest einen Schaltzeitpunkt kann es sich um einen Schaltzeitpunkt zum Öffnen oder Schließen des Schalters handeln. Bevorzugt ist jedoch vorgesehen, dass der zumindest eine Schaltzeitpunkt ein Schaltzeitunkt zum Öffnen des Schalters ist. Es ist aber auch möglich, dass der zumindest eine Schaltzeitpunkt ein Schaltzeitpunkt zum Schließen des Schalters ist. Der zeitliche Verlauf kann ein zumindest teilweise zukünftiger zeitlicher Verlauf sein, der zeitlich zukünftige Werte der Schwingung, die zum momentanen Zeitpunkt noch nicht eingetreten sind - aber in der aktuellen Periode eintreten werden, aufweist. Die Erfassung eines zukünftigen zeitlichen Verlaufs ist bei der sensorischen Messung einer Schwingung, wie es im Stand der Technik der Fall ist, nicht möglich. Der zeitliche Verlauf wird mithilfe eines mathematischen Modells des Gleichspannungswandlers ermittelt. Das mathematische Modell kann den Gleichspannungswandler bzw. für die Zwecke der Schwingungserfassung relevante Teile davon mithilfe von mathematischen Gleichungen abbilden. Das mathematische Modell kann insbesondere Differentialgleichungen und/oder Lösungen für Differentialgleichungen enthalten, die den Energieaustausch zwischen dem Induktivitätsbauelement und der parasitären Kapazität beschreiben. Es ist aber auch möglich, dass das mathematische Modell numerisch gelöst wird, um den zeitlichen Verlauf der Schwingung zu ermitteln. Der zeitliche Verlauf der Schwingung wird vorzugsweise als diskreter zeitlicher Verlauf, vorzugsweise mithilfe der Steuer- und/oder Regelungseinrichtung, bestimmt. Parameter für das mathematische Modell, insbesondere Widerstands-, Induktivitäts- und Kapazitätsparameter, können vor Anwendung des erfindungsgemäßen Verfahrens beispielsweise berechnet, gemessen und/oder empirisch bestimmt worden sein, soweit sie nicht bekannt sind, und in das mathematische Modell eingegeben worden sein. Der zeitliche Verlauf der Schwingung kann auch Oberschwingungen enthalten. Vorzugsweise werden Oberschwingungen bei der Ermittlung des zeitlichen Verlaufs jedoch vernachlässigt, sodass die Schwingung nur eine erste harmonische Schwingung mit nur einer einzigen Frequenz aufweist. Oberschwingungen können beispielsweise durch Nichtlinearitäten entstehen, beispielsweise durch ein nichtlineares Induktivitätsbauelement und nichtlineare parasitäre Kapazitäten. Durch die Vernachlässigung der Nichtlinearitäten wird der Berechnungsaufwand für den zeitlichen Verlauf der Schwingung reduziert. Die Schwingung kann auch nur zeitweise nach bestimmten Schalthandlungen oder Ereignissen innerhalb einer Periode des Schaltmusters auftreten. Typischerweise tritt die Schwingung in jeder Periode des Schaltmusters zumindest zeitweise auf. Der zeitliche Verlauf der Schwingung kann in jeder Periode des Schalters neu bestimmt werden. Die Amplitude, Frequenz und/oder die Nullphasenlage der Schwingung kann unter anderem von den Werten der Eingangsspannung, der Ausgangsspannung und einer Schalthandlung des Schalters abhängen. Die Eingangsspannung und/oder die Ausgangsspannung können daher gemessen und bei der Ermittlung des zeitlichen Verlaufs, insbesondere mithilfe des mathematischen Modells, vorzugsweise als Startwerte, berücksichtigt werden. Wie eingangs bereits erwähnt, tritt die Schwingung in Folge einer Anregung durch einen Schaltvorgang des Schalters auf. Dabei bilden die parasitäre Kapazität, welche beispielsweise in dem Schalter, einer Wicklung und/oder einem allfälligen Diodenbauelement enthalten sein kann, einen Schwingkreis mit dem Induktivitätsbauelement, der durch bestimmte Frequenzen oder sprunghafte Spannungsänderungen, ausgelöst durch Schalthandlungen des Schalters, angeregt wird. Der Gleichspannungswandler ist ein Hochsetzsteller. Ein Gleichspannungswandler kann beispielsweise in einem kontinuierlichen Betrieb oder einem diskontinuierlichen Betrieb betrieben werden. Der diskontinuierliche Betrieb wird auch als lückender Betrieb bezeichnet. Im diskontinuierlichen bzw. lückenden Betrieb wird das Induktivitätsbauelement geladen und anschließend im Wesentlichen vollständig entladen, bevor eine neue Periode des Schaltmusters beginnt. Besonders häufig treten Schwingungen im lückenden Betrieb des Gleichspannungswandlers auf. Die Eingangsseite kann einen oder mehrere Kontakte zum Anlegen der Eingangsspannung aufweisen. Die Ausgangsseite kann ebenfalls einen oder mehrere Kontakte aufweisen, um die Ausgangsspannung abzugreifen. An der Ausgangsseite kann der Gleichspannungswandler mit einer weiteren elektrischen Einrichtung, beispielsweise einer Wechselrichterausgangsstufe eines Wechselrichters, verbunden sein. Bei dem Schalter handelt es sich vorzugsweise um einen Transistor, insbesondere um einen IGBT, MOSFET, SiC-Transistor, GaN-Transistor, usw. Das Schaltmuster kann beispielsweise ein PWM-Schaltmuster (PWM = Pulsweitenmodulation) mit einem vorzugsweise vorgegebenen Tastgrad (Duty Cycle) sein. Das Schaltmuster weist zumindest einen Schaltzeitpunkt zum Öffnen und zumindest einen Schaltzeitpunkt zum Schließen des Schalters je Periode auf. Durch Anpassen des zumindest einen Schaltzeitpunktes, insbesondere des Schaltzeitpunktes zum Öffnen des Schalters, wird der Tastgrad zumindest in einer Periode verändert. Der Schalter kann beispielsweise von einer Steuer- und/oder Regelungseinrichtung angesteuert werden. Das Induktivitätsbauelement kann beispielsweise eine Spule oder eine Drossel sein.

Es ist vorgesehen, dass der zumindest eine Schaltzeitpunkt des Schaltmusters unter Beibehaltung der Periodendauer des Schaltmusters angepasst wird. Mit anderen Worten bleibt die Frequenz des Schaltmusters im Wesentlichen konstant und wird nicht durch die Anpassung des zumindest einen Schaltzeitpunktes beeinflusst. Es wird lediglich der Tastgrad verändert, um den Schaltzeitpunkt anzupassen. Die Frequenz des Schaltmusters beträgt zwischen 20 kHz und 150 kHz, insbesondere zwischen 30 kHz und 50 kHz. Um die Periodendauer bzw. Frequenz gleich zu halten, kann vorgesehen sein, dass ausschließlich einen Schaltzeitpunkt zum Öffnen des Schalters oder ausschließlich einen Schaltzeitpunkt zum Schließen des Schalters des Schaltmusters angepasst wird. Der zumindest eine Schaltzeitpunkt kann in jeder Periode des Schaltmusters angepasst werden.

Bei einer Ausführungsform der Erfindung ist vorgesehen, dass der Gleichspannungswandler in einem lückenden Betrieb betrieben wird. Der lückende Betrieb, der auch als diskontinuierlicher Betrieb bezeichnet wird, kann sich insbesondere bei kleinen Lasten an der Ausgangsseite einstellen oder gewählt werden. Der lückende Betrieb kann auch bei geringer Leistung auf der Eingangsseite gewählt werden oder sich einstellen, beispielsweise am Morgen oder am Abend bei einer Photovoltaikanlage bei geringerer Sonneneinstrahlung. Der lückende Betrieb kann sich insbesondere bei kleinen Strömen einstellen. Der lückende Betrieb zeichnet sich dadurch aus, dass das Induktivitätsbauelement geladen und anschließend im Wesentlichen vollständig entladen wird, bevor eine neue Periode des Schaltmusters beginnt. Schwingungen von elektrischen Größen treten besonders häufig im lückenden Betrieb auf. Die Schwingung der elektrischen Größe entsteht aufgrund des lückenden Betriebs des Gleichspannungswandlers. Die Schwingung beginnt mit einem Nulldurchgang des Stromes durch das Induktivitätsbauelement. Die Schwingung wird vorzugsweise mit dem nächsten Schaltzeitpunkt des Schalters, insbesondere durch Schließen des Schalters, beendet.

Insbesondere wenn der Gleichspannungswandler ein Hochsetzsteller ist, ist es vorteilhaft, wenn das Schaltmusters durch zeitliches Verschieben eines Schaltzeitpunktes zum Öffnen des Schalters derart angepasst wird, dass der Schalter in der vorgegebenen Phase der Schwingung geschlossen wird. Durch das zeitliche Verschieben des Schaltzeitpunktes zum Öffnen des Schalters wird auch die Schwingung zeitlich verschoben und kann dadurch in der vorgegebenen Phase mit dem Zeitpunkt zum Schließen des Schalters zusammenfallen. Bevorzugt ist dabei vorgesehen, dass der zumindest eine Schaltzeitpunkt zum Schließen des Schalters im Schaltmuster zeitlich unverändert bleibt. Somit kann die Periodendauer bzw. die Frequenz des Schaltmusters erhalten bleiben. Wenn der Schalter geschlossen wird, folgt bei einem Hochsetzsteller ein Anstieg des Stromes durch das Induktivitätsbauelement. Durch das Schließen des Schalters in der vorgegeben Phase der Schwingung, insbesondere der Schwingung des Stromes durch das Induktivitätsbauelement, erhält der Stromanstieg bei einer Ausführungsform der Erfindung einen vorgegebenen Startwert für den nachfolgenden Stromanstieg. Bei einer anderen Ausführungsform weist die an dem Schalter abfallende elektrische Spannung zum Schaltzeitpunkt für das Schließen des Schalters einen vorgegebenen Wert, vorzugsweise einen minimalen Wert, insbesondere 0 V, auf, sodass die elektrischen Schaltverluste gering gehalten werden können.

Bei einer Ausführungsform der Erfindung ist vorgesehen, dass die vorgegebene Phase der Schwingung in jeder n-ten Periode des Schaltmusters im Wesentlichen ident ist, wobei n eine natürliche Zahl ist. Dabei kann n beispielsweise 1, 2, 3, 4, 5, 6 oder 7 sein. Wenn beispielsweise n=1 ist, kann eine die Schwingung aufweisende elektrische Größe, wie beispielsweise der Strom durch das Induktivitätsbauelement oder die an dem Schalter abfallende elektrische Spannung, in jeder Periode des Schaltmusters einen im Wesentlichen gleichen Wert zum Schaltzeitpunkt zum Öffnen und/oder Schließen des Schalters aufweisen. Es kann aber auch zum Beispiel vorgesehen sein, dass die vorgegebene Phase nur in jeder zweiten (n=2) oder jeder dritten (n=3) - allgemein in jeder n-ten - Periode des Schaltmusters ident ist. Die dazwischenliegenden Perioden können andere vorgegebene Phasen aufweisen, um im Mittel über mehrere Perioden des Schaltmusters gesehen einen Mittelwert der die Schwingung aufweisende elektrischen Größe zu erhalten. Auch die vorgegebenen Phasen in den dazwischenliegenden Perioden können sich jede n-te Periode des Schaltmusters wiederholen. Die beschrieben Ausführungsform der Erfindung kann insbesondere vorteilhaft sein, wenn die vorgegebene Phase die Schwingung der an dem Schalter abfallenden elektrischen Spannung betrifft. In diesem Fall kann durch die Phasenverschiebung zwischen der Schwingung der an dem Schalter abfallenden elektrischen Spannung und dem Strom durch das Induktivitätsbauelement der Strom durch das Induktivitätsbauelement einen unerwünschten Wert annehmen. Um dies auszugleichen, kann vorgesehen sein, für aufeinanderfolgende Perioden unterschiedliche vorgegebene Phasen zu verwenden, sodass im zeitlichen Mittel ein gewünschter Strom durch das Induktivitätsbauelement angenähert oder erzielt werden kann. Dabei können die vorgegebenen Phasen in den Perioden des Schaltmusters um ein ganzzahliges Vielfaches der Schwingungsperiode versetzt sein, um die Schaltverluste weiterhin zu minimieren.

Bei einer Ausführungsform der Erfindung kann die vorgegebene Phase beispielsweise ein Nulldurchgang, ein Minimum oder ein Maximum der Schwingung sein. Selbstverständlich können auch andere Phasen der Schwingung als vorgegebene Phase herangezogen werden. Die genannten Phasen stellen jedoch charakteristische Phasen der Schwingung dar, die besonders leicht identifizierbar sind. Zur Vermeidung von elektrischen Schaltverlusten ist es besonders vorteilhaft, wenn die Schwingung der an dem Schalter abfallenden Spannung ein Minimum oder ein Nulldurchgang der Schwingung ist. Bevorzugt ist, wenn in der vorgegebenen Phase der Betrag der an dem Schalter abfallenden Spannung ein Minimum aufweist, sodass Schaltverluste vermieden werden.

Um allfällige Reaktionszeiten von Schaltern zu kompensieren, ist es vorteilhaft, wenn der zeitliche Verlauf der Schwingung ein zumindest teilweise zukünftiger zeitlicher Verlauf der Schwingung ist. Bei einer Ausführungsform der Erfindung ist der zeitliche Verlauf ein vollständig zukünftiger zeitlicher Verlauf der Schwingung. Zukünftig bedeutet, dass Werte der Schwingung ermittelt werden, die erst eintreten werden - insbesondere in der aktuellen Periode. Ein zumindest teilweise zukünftiger zeitlicher Verlauf kann auch bereits vergangene, d.h. eingetretene Werte der Schwingung, aufweisen. Zu einem teilweise oder vollständig zukünftigen zeitlichen Verlauf können auch laufend neue zukünftige Werte hinzugefügt werden.

Bei einer Ausführungsform der Erfindung kann in jeder Periode des Schaltmusters erneut ein zeitlicher Verlauf der Schwingung ermittelt werden. Um den zeitlichen Verlauf der Schwingung in jeder Periode von Neuem ermitteln zu können, können beispielsweise die aktuellen Werte der Eingangsspannung und/oder der Ausgangsspannung herangezogen werden.

Günstig ist, wenn eine Dauer des zeitlichen Verlaufs der Schwingung zumindest der Periodendauer des Schaltmusters entspricht.

Um den zumindest einen Schaltzeitpunkt des Schaltmusters anzupassen, insbesondere zeitlich zu verschieben, kann bei einer Ausführungsform der Erfindung auf Basis des zeitlichen Verlaufs ein Korrekturwert ermittelt werden. Mit dem Korrekturwert kann das Schaltmuster, insbesondere dessen Tastgrad, verändert werden. Der Korrekturwert kann das Schaltmuster in zumindest einer Periode verändern. Der Korrekturwert kann beispielsweise die Einheit Sekunden besitzen und den Zeitpunkt zum Öffnen oder Schließen des Schalters zeitlich um den Wert des Korrekturwerts verschieben.

Bei einer Ausführungsform der Erfindung wird der zeitliche Verlauf der Schwingung ermittelt, indem ein zeitlicher Verlauf der elektrischen Größe berechnet wird, der die Schwingung aufweist. Die Schwingung kann in mehreren elektrischen Größen des Gleichspannungswandlers, insbesondere in elektrischen Strömen und/oder in elektrischen Spannungen, enthalten sein. Zu beachten ist jedoch, dass die Amplitude und/oder die Phasenlage der Schwingung in unterschiedlichen elektrischen Größen verschieden sein können. Beispielsweise kann eine Schwingung, die in einer Spannung enthalten ist, zu derselben Schwingung, die in einem Strom enthalten ist, um einen Phasenverschiebungswinkel verschoben sein und eine andere Amplitude aufweisen. Die Frequenz der Schwingung ist aber in allen elektrischen Größen gleich. Vorzugsweise ist die elektrische Größe ein durch das Induktivitätsbauelement fließender Strom oder eine an dem Schalter abfallende elektrische Spannung.

Bei einer Ausführungsform der Erfindung kann vorgesehen sein, dass in der vorgegebenen Phase ein die Schwingung aufweisender Strom, insbesondere ein Strom durch das Induktivitätsbauelement, und/oder eine die Schwingung aufweisende Spannung, insbesondere eine an dem Schalter abfallende elektrische Spannung, einen vorgegebenen Sollwert aufweist. Beispielsweise kann vorgesehen sein, dass der vorgegebene Sollwert ein Minimalwert der Spannung ist, sodass allfällige Schaltverluste durch den Schalter gering gehalten werden.

Bei der Erfindung ist vorgesehen, dass in der vorgegebenen Phase der Strom durch das Induktivitätsbauelement einen vorgegebenen Sollwert derart aufweist, dass der Strom zu Beginn eines anschließenden Stromanstiegs mit einer bekannten Steigung zu einem Schaltzeitpunkt zum Schließen des Schalters einen vorgegebenen Wert annimmt. Die Steigung des Stromanstiegs kann mithilfe des Messwertes der Eingangsspannung und eines oder mehrerer Parameterwerte des Gleichspannungswandlers, wie beispielsweise eines Induktivitätsparameterwertes und optional eines Widerstandswerts, ermittelt werden. Bei dieser Ausführungsform der Erfindung kann der Strom durch das Induktivitätsbauelement und damit auch der Ausgangsstrom und die Ausgangsspannung des Gleichspannungswandlers gezielt eingestellt und damit eine allfällige Regelung des Gleichspannungswandlers hinsichtlich des Ausgangsstromes verbessert werden.

Anspruch 10 betrifft einen Wechselrichter für eine Photovoltaikanlage, wobei der Wechselrichter einen Gleichspannungswandler beinhaltet, nämlich einen Hochsetzsteller, der folgendes aufweist:
- eine Eingangsseite für eine Eingangsspannung und einen Eingangsstrom,
- eine Ausgangsseite für eine Ausgangsspannung und einen Ausgangsstrom,
- zumindest einen ansteuerbaren Schalter,
- zumindest ein Induktivitätsbauelement, und
- eine Steuer- und/oder Regelungseinrichtung, die dazu eingerichtet ist, den Gleichspannungswandler in einem lückenden Betrieb zu betreiben und den Schalter gemäß einem periodischen Schaltmuster mit einer Periodendauer derart zu schalten, dass die Eingangsspannung in die Ausgangsspannung gewandelt wird und die Ausgangsspannung einem Ausgangsspannungssollwert entspricht,

wobei zumindest eine elektrische Größe des Gleichspannungswandlers, nämlich ein Strom durch das Induktivitätsbauelement, im Betrieb des Gleichspannungswandlers zumindest zeitweise eine Schwingung aufgrund des lückenden Betriebs aufweist, die durch eine Anregung eines aus dem Induktivitätsbauelement und einer parasitären Kapazität gebildeten Schwingkreises entsteht, wobei die Schwingung beginnt, nachdem der Strom durch das Induktivitätsbauelement seinen Nulldurchgang erreicht, wobei die Steuer- und/oder Regelungseinrichtung dazu eingerichtet ist, einen zeitlichen Verlauf der Schwingung mithilfe eines mathematischen Modells des Gleichspannungswandlers oder Teile des Gleichspannungswandlers zu berechnen und das Schaltmuster auf Basis des berechneten zeitlichen Verlaufs der Schwingung anzupassen, sodass zumindest ein Schaltzeitpunkt des Schaltmusters mit einer vorgegebenen Phase der Schwingung zusammenfällt, wobei in der vorgegebenen Phase der Strom durch das Induktivitätsbauelement einen vorgegebenen Sollwert derart aufweist, dass der Strom durch das Induktivitätsbauelement zu Beginn eines anschließenden Stromanstiegs mit einer bekannten Steigung zu einem Schaltzeitpunkt zum Schließen des Schalters einen vorgegebenen Wert annimmt,
wobei die Steuer- und/oder Regelungseinrichtung dazu eingerichtet ist, den zumindest einen Schaltzeitpunkt des Schaltmusters unter Beibehaltung der Periodendauer des Schaltmusters anzupassen, wobei das Schaltmuster eine Frequenz zwischen 20 kHz und 150 kHz aufweist und durch zeitliches Verschieben eines Schaltzeitpunktes zum Öffnen des Schalters derart angepasst wird, dass der Schalter in der vorgegebenen Phase der Schwingung geschlossen wird.

Der Gleichspannungswandler kann somit dazu eingerichtet sein, das oben beschriebene Verfahren zum Betreiben eines Gleichspannungswandlers auszuführen. Die oben in Zusammenhang mit dem Verfahren beschriebenen Merkmale und Vorteile sind auf den Wechselrichter mit dem Gleichspannungswandler übertragbar. Die Steuer- und/oder Regelungseinrichtung kann durch einen Mikroprozessor gebildet sein. Bei einer Ausführungsform der Erfindung kann eine Spannungssensoreinrichtung zur Messung der Eingangs- und/oder Ausgangsspannung des Gleichspannungswandlers vorgesehen sein. Zusätzlich oder alternativ kann eine Stromsensoreinrichtung zur Messung des Eingangs- und/oder des Ausgangsstroms des Gleichspannungswandlers vorgesehen sein. Die Ausgangsspannung und/oder der Ausgangsstrom des Gleichspannungswandlers können bei einer Ausführungsform der Erfindung mithilfe der Steuer- und/oder Regelungseinrichtung geregelt werden.

Der Gleichspannungswandler wird bei einem Wechselrichter für eine Photovoltaikeinrichtung eingesetzt. Dabei kann vorgesehen sein, dass der Gleichspannungswandler eine Eingangsspannung zu einer Ausgangsspannung wandelt, die anschließend durch eine Wechselrichterausgangsstufe des Wechselrichters in eine Wechselspannung umgewandelt wird. Die Wechselrichterausgangsstufe erzeugt mithilfe von elektronischen Schaltern eine Wechselspannung. Die Ausgangsspannung des Gleichspannungswandlers kann somit als Eingangsspannung für die Wechselrichterausgangsstufe dienen.

Nachfolgend wird die Erfindung anhand von Figuren näher erläutert, auf die sie allerdings nicht beschränkt sein soll.

Es zeigen:
Fig. 1A einen Gleichspannungswandler;
Fig. 1B ein Schaltmuster;
Fig. 2 ein Schaltmuster (Teilbild A), eine an einem Schalter abfallende elektrische Spannung (Teilbild B) und einen Strom durch ein Induktivitätsbauelement (Teilbild C);
Fig. 3 unterschiedliche Stromanstiege nach dem Schließen eines Schalters des Gleichspannungswandlers (Teilbild A) und unterschiedliche Spannungsverläufe von an dem Schalter des Gleichspannungswandlers abfallenden elektrische Spannungen (Teilbild B);
Fig. 4 eine Veranschaulichung der Verschiebung eines Schaltzeitpunkts zum Öffnen des Schalters in Zusammenhang mit einem Strom durch ein Induktivitätsbauelement; Teilbild A zeigt einen Strom durch das Induktivitätsbauelement; Teilbild B zeigt ein Schaltmuster; Teilbild C zeigt einen angepassten Strom durch das Induktivitätsbauelement; Teilbild D zeigt ein angepasstes Schaltmuster
Fig. 5 ein Verhältnis zwischen einem Ausgangsstrom und einem Tastgrad;
Fig. 6 eine Verschiebung eines Schaltzeitpunkts zum Öffnen des Schalters in Zusammenhang mit einer an einem Schalter abfallenden elektrischen Spannung;
Fig. 7 veranschaulicht eine Ausführungsform, bei der nur die Anzahl der Schwingungsperioden in jeder n-ten Schaltperiode ident ist; und
Fig. 8 einen Wechselrichter.

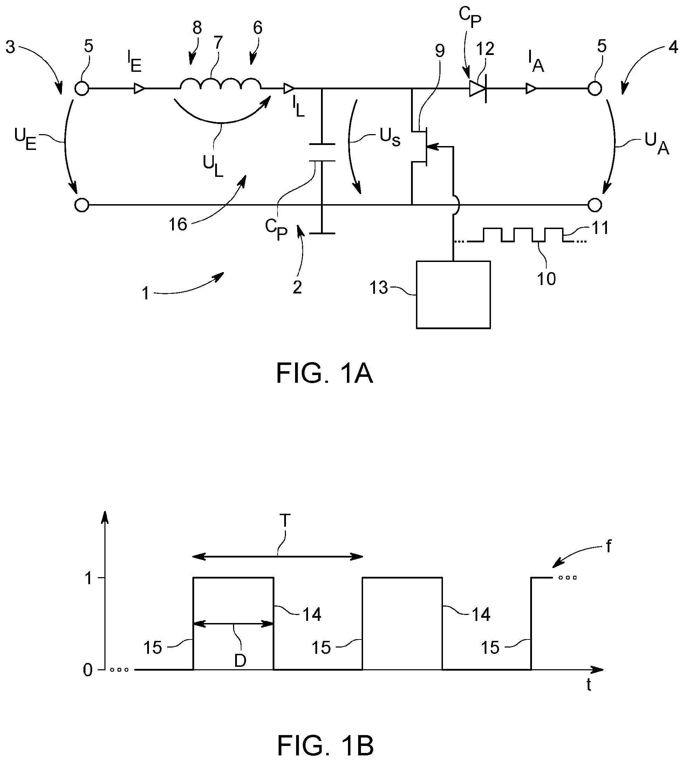

Fig. 1A zeigt einen Gleichspannungswandler 1 in Form eines Hochsetzstellers 2 mit einer Eingangsseite 3 und einer Ausgangsseite 4. Die Eingangsseite 3 weist Kontakte 5 zum Anlegen einer Eingangsspannung U_{E} auf. Die Ausgangsseite 4 weist Kontakte 5 zum Abgreifen einer Ausgangsspannung U_{A} auf. An die Ausgangsseite kann eine Last (nicht gezeigt) angeschlossen werden. Ein Eingangsstrom I_{E} fließt an der Eingangsseite 3 in den Gleichspannungswandler 1. Ein Ausgangsstrom I_{A} fließt an der Ausgangsseite 4 aus dem Gleichspannungswandler 1 heraus. Der Hochsetzsteller 2 ist dazu ausgebildet, die Eingangsspannung U_{E} auf die im Vergleich zur Eingangsspannung U_{E} höhere Ausgangsspannung U_{A} zu wandeln. Zu diesem Zweck weist der Hochsetzsteller 2 ein Speicherelement 6 in Form eines Induktivitätsbauelements 7 auf, das als Spule 8 ausgebildet ist. Durch Schalten eines Schalters 9, der ein Transistor sein kann, gemäß einem Schaltmuster 10, vorzugsweise einem PWM-Schaltmuster 11, wird das Induktivitätsbauelement 7 mit elektromagnetischer Energie periodisch geladen und entladen, wobei sich die über das Induktivitätsbauelement 7 abfallende Spannung U_{L} und der durch das Induktivitätsbauelement 7 fließende Strom I_{L} ändert und dadurch die Eingangsspannung U_{E} in die höhere Ausgangsspannung U_{A} gewandelt wird. Ein Strom I_{L} durch das Induktivitätsbauelement 7 entspricht im vereinfachten Fall des in Fig. 1A dargestellten Ersatzschaltbildes dem Eingangsstrom I_{E}.

Um ein Rückfließen des Ausgangsstromes I_{A} zu verhindern und das Laden des Induktivitätsbauelements 7 durch die Eingangsspannung U_{E} bei geschlossenem Schalter 9 zu ermöglichen, ist ein Diodenbauelement 12 vorgesehen. Wie allgemein bekannt, wird dadurch der Ausgangsstrom I_{A} des Hochsetzstellers gemittelt. Das Schaltmuster 10 wird von einer Steuer- und/oder Regelungseinrichtung 13 vorgegeben und weist Schaltzeitpunkte 14 zum Öffnen und Schaltzeitpunkte 15 zum Schließen des Schalters 9 auf (siehe Fig. 1B). Das Schaltmuster 10 ist ein periodisches Schaltmuster 10 mit einer Frequenz f zwischen 20 kHz und 150 kHz und einer entsprechenden Periodendauer bzw. Periode T. Das Schaltmuster besitzt einen Tastgrad D, der das Verhältnis zwischen einer Schaltereinschaltzeit (Zeitspanne zwischen den Schaltzeitpunkten 15 und 14) und der Periodendauer T beschreibt. Das Schaltmuster 10 ist in Fig. 1B näher gezeigt.

Obwohl in dem Gleichspannungswandler 1 nur ein Speicherelement 6 verwendet wird, bildet sich aufgrund parasitärer Kapazitäten C_{P}, die in dem Schalter 9, in einer Wicklung und/oder dem Diodenbauelement 12 enthalten sein können, ein Schwingkreis 16 aus, der durch Schalthandlungen des Schalters 9 angeregt werden kann, wie im Folgenden gezeigt wird. Die parasitären Kapazitäten C_{P} sind in Fig. 1A schematisch als Kondensatoren eingezeichnet.

Der Gleichspannungswandler 1 kann in einem lückenden oder einem nicht lückenden Betrieb betrieben werden. In einem lückenden Betrieb wird das Induktivitätsbauelement 7 geladen und anschließend im Wesentlichen vollständig entladen, bevor eine neue Periode des Schaltmusters 10 beginnt.

Im nicht lückenden Betrieb (kontinuierlicher Betrieb) beträgt die mittlere Ausgangsspannung U_{A} eines Hochsetzstellers 2 gemäß Fig. 1A näherungsweise ${U}_{A} = {U}_{E} \frac{1}{1 - D} .$

Die Ausgangsspannung U_{A} ist im kontinuierlichen Betrieb nur vom Tastgrad D und der Eingangsspannung U_{E} abhängig.

Im lückenden Betrieb (diskontinuierlicher Betrieb) beträgt die mittlere Ausgangsspannung U_{A} eines Hochsetzstellers 2 gemäß Fig. 1A näherungsweise ${U}_{A} = {U}_{E} \frac{1 + \sqrt{1 + \frac{2 {D}^{2} RT}{L}}}{2} ,$ wobei R ein allfälliger Widerstand als Belastung durch die folgende Stufe (z.B. DC/AC Stufe), L der Induktivitätswert des Induktivitätsbauteils 7, D der Tastgrad bzw. Duty Cycle und T die Periodendauer bedeutet. Der Ausgangsstrom I_{A} berechnet sich entsprechend näherungsweise aus ${I}_{A} = \frac{{U}_{E}^{2} {D}^{2} T}{2 L \left({U}_{A}-{U}_{E}\right)} .$

Dabei ist das Verhältnis von U_{E}/U_{E} proportional zum Verhältnis I_{A}/I_{E} (in Mittelwerten über einige Perioden - also im Zeitbereich von ms). Unter der Annahme, dass der Gleichspannungswandler 1 keine Verluste aufweist, gilt auch, dass die Eingangsleistung (also I_{E} x U_{E}) gleich der Ausgangsleistung (I_{A} x U_{A}) ist.

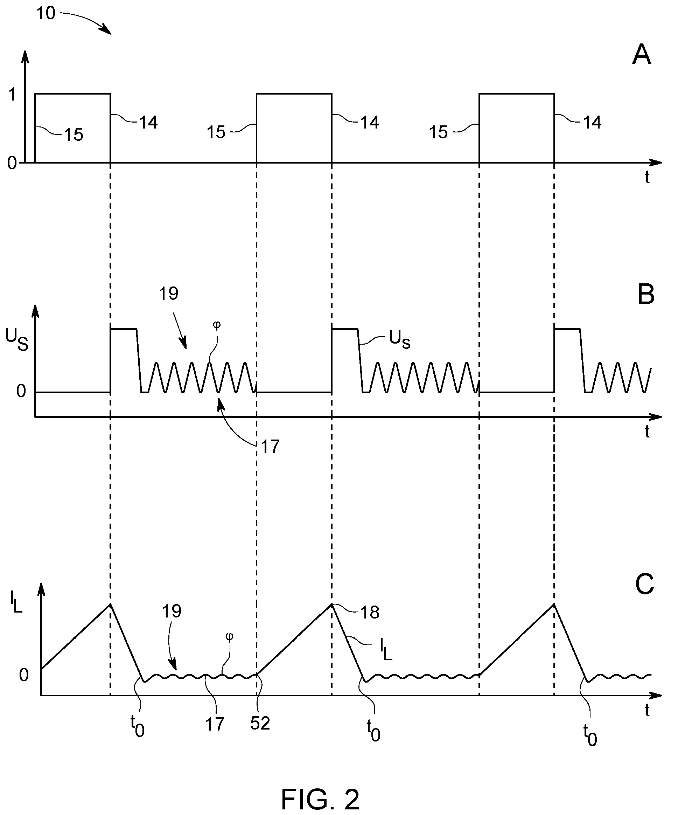

Fig. 2 zeigt zusammengehörende Zeitverläufe von elektrischen Größen des Gleichspannungswandlers im lückenden Betrieb in Teilbildern A, B und C.

Teilbild A zeigt einen Zeitverlauf eines Schaltmusters 10 für einen lückenden Betrieb des Gleichspannungswandlers 1 mit Schaltzeitpunkten 14 zum Öffnen und Schaltzeitpunkte 15 zum Schließen des Schalters 9. Die Abszisse beschreibt die Zeit t in µs. Die Ordinate beschreibt einen logischen Spannungspegel.

Teilbild C zeigt einen Strom I_{L} durch das Induktivitätsbauelement 7 im lückenden Betrieb des Gleichspannungswandlers 1. Der Strom I_{L} ist in der gezeigten Ausführungsform des Gleichspannungswandlers 1 mit dem Eingangsstrom I_{E} ident. Die Abszisse beschreibt die Zeit t in µs. Die Ordinate beschreibt einen Strom I_{L} in Ampere. Erkennbar ist, dass nach dem Öffnen des Schalters 9 zum Schaltzeitpunkt 14 der Strom I_{L} durch das Induktivitätsbauelement 7 im Wesentlichen linear abnimmt und bei t₀ einen Nulldurchgang aufweist. Nach dem Nulldurchgang weist der Strom I_{L} eine Schwingung 17 auf, die erst beendet wird, wenn der Schalter 9 zum Schaltzeitpunkt 15 geschlossen wird. Nach dem Schließen des Schalters 9 beginnt der Strom I_{L} durch das Induktivitätsbauelement 7 im Wesentlichen linear zu steigen, bis der Schalter 9 wieder geöffnet wird. Je nach Phase φ der Schwingung 17 in dem Strom I_{L} durch das Induktivitätsbauelement 7 beginnt der Strom I_{L} zum Zeitpunkt des Schließens des Schalters 9 von einem anderen Startwert 52 bis zu einem anderen Endwert 18 zu steigen.

Teilbild B zeigt eine an dem Schalter 9 abfallende elektrische Spannung U_{S} im lückenden Betrieb des Gleichspannungswandlers 1. Die Abszisse beschreibt die Zeit t in µs. Die Ordinate beschreibt eine Spannung U_{S} in Volt. Erkennbar ist, dass die Spannung U_{S} nach dem Öffnen des Schalters 9 (Schaltzeitpunkt 14) auf den Wert der Ausgangsspannung U_{A} springt, so lange konstant bleibt, bis I_{L} auf Null gesunken ist, und anschließend auf im Wesentlichen 0V fällt. Anschließend weist die Spannung U_{S} ebenfalls eine Schwingung 17 auf. Die Schwingung 17 in der Spannung U_{S} ist zu der Schwingung 17 im Strom I_{L} durch das Induktivitätsbauelement 7 um einen Phasenwinkel von 90° verschoben. Die Schwingung 17 wird beendet, wenn der Schalter 9 geschlossen wird. Je nach Phasenwinkel bzw. Phase φ der Schwingung 17 in der Spannung U_{S} wird der Schalter 9 mit der zum Zeitpunkt 15 anliegenden Spannung U_{S} geschlossen, wodurch elektrische Schaltverluste entstehen.

Fig. 2 zeigt demnach, dass bestimmte elektrische Größen, insbesondere der Strom I_{L} durch das Induktivitätsbauelement 7 und die an dem Schalter 9 abfallende elektrische Spannung U_{S}, im lückenden Betrieb des Gleichspannungswandlers 1 zumindest zweitweise eine Schwingung 17 aufweisen. Die Schwingung 17 in der Spannung U_{S} ist dabei zu der Schwingung 17 in dem Strom I_{L} um einen Phasenwinkel von im Wesentlichen 90° versetzt. Auch die Amplituden der Schwingungen 17 sind unterschiedlich. In beiden elektrischen Größen besitzt die Schwingung 17 jedoch die gleiche Frequenz.

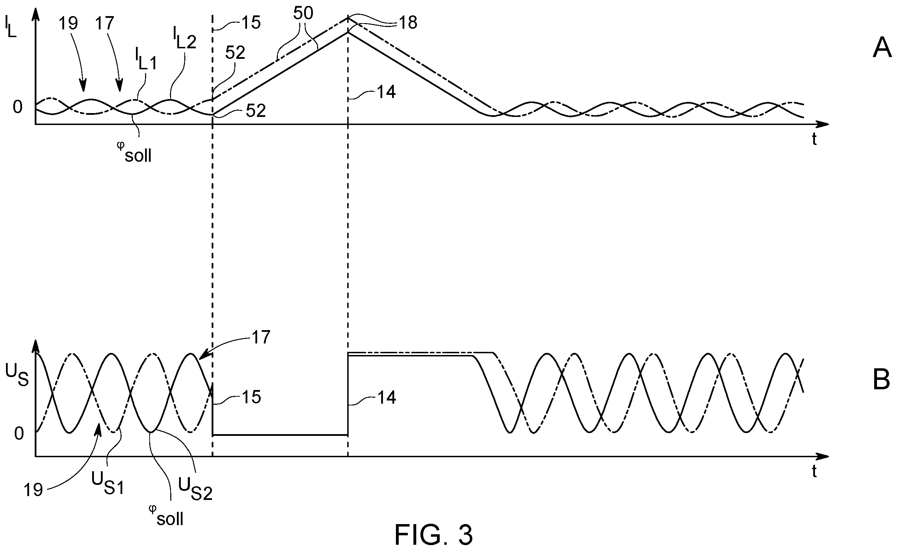

Fig. 3 zeigt in Teilbild A die Auswirkung unterschiedlicher Phasen φ der Schwingung 17 beim Schließen des Schalters 9. Die Abszisse beschreibt die Zeit t in µs. Die Ordinate beschreibt einen Strom I_{L} in Ampere. Teilbild A zeigt zwei phasenversetzte Ströme I_{L1} und I_{L2} durch das Induktivitätsbauelement 7, die eine Schwingung 17 aufweisen. Zum Schaltzeitpunkt 15 des Schließens des Schalters 9 weist die Schwingung 17 der Ströme I_{L1}, I_{L2} unterschiedliche Phasen φ und damit die Ströme I_{L1}, I_{L2} unterschiedliche Startwerte 52 auf, sodass die anschließenden im Wesentlichen linearen Stromanstiege 50 zueinander versetzt sind und auf unterschiedliche Endwerte 18 zum Schaltzeitpunkt 14 zum Öffnen des Schalters 9 ansteigen. Je nach Phase φ führt die Schwingung 17 somit zu unterschiedlichen Endwerten 18 des Stromes I_{L} durch das Induktivitätsbauelement 7 und damit zu unterschiedlichen Ausgangsströmen I_{A} und einer daraus resultierenden unterschiedlichen Ausgangsleistung bzw. Eingangsleistung.

Teilbild B in Fig. 3 zeigt die entsprechenden Verläufe zweier an dem Schalter 9 abfallenden elektrischen Spannung U_{S1}, U_{S2} analog zur Situation in Teilbild A in Fig. 3. Die Abszisse beschreibt die Zeit t in µs. Die Ordinate beschreibt eine Spannung U_{S} in Volt. Erkennbar ist, dass zum Schaltzeitpunkt 15 zum Schließen des Schalters 9 je nach Phase φ der Schwingung 17 unterschiedliche Spannungen vorliegen. Wenn die Spannung U_{S1} bzw. U_{S2} ungleich 0V bzw. höher ist, kann dies zu höheren Schaltverlusten führen. Erkennbar ist, dass U_{S1} zum Schaltzeitpunkt 15 eine höhere Spannung (halber Spitzenwert) aufweist als U_{S2} (im Wesentlichen Null Volt).

Aufgrund der höheren Spannung U_{S1} im Vergleich zu U_{S2} ist entsprechend auch der Startwert 52 und der Endwert 18 von I_{L1} höher als bei I_{L2}.

Um den Einfluss der Schwingung 17 auf den Ausgangsstrom I_{A} zu kompensieren und/oder Schaltverluste zu minimieren, ist erfindungsgemäß vorgesehen, einen zeitlichen Verlauf 19 der Schwingung 17 zu ermitteln, insbesondere zu berechnen, und das Schaltmusters 10 auf Basis des ermittelten zeitlichen Verlaufs 19 der Schwingung 17 anzupassen, indem zumindest ein Schaltzeitpunkt 14, 15 des Schaltmusters 10 verschoben wird.

Dadurch wird erreicht, dass zumindest ein Schaltzeitpunkt 14, 15 mit einer vorgegebenen Phase φₛₒₗₗ der Schwingung 17 zusammenfällt, wie im Folgenden beschrieben wird. Dadurch kann der Schalter 9 geschaltet werden, wenn der Strom I_{L} durch das Induktivitätsbauelement 17 und/oder die an dem Schalter 9 abfallende elektrische Spannung U_{S} einen vorgegeben Wert aufweist.

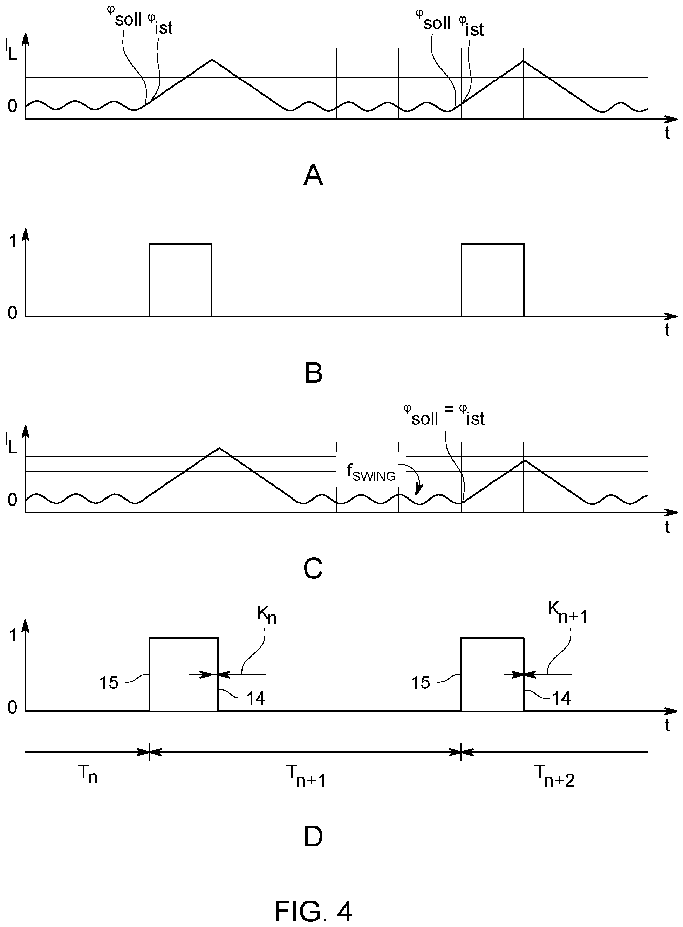

Das Schaltmuster 10 kann in jeder Periode T gemäß Fig. 4 angepasst werden. In Fig. 4 bis Fig. 7 sind die einzelnen Perioden T mit einem Index n versehen. Insbesondere können der Schaltzeitpunkt 14 zum Öffnen des Schalters 9 und/oder der Schaltzeitpunkt 15 zum Schließen des Schalters 9 zeitlich nach vorne oder hinten verschoben werden.

Der zeitliche Verlauf 19 der Schwingung 17, vorzugsweise der Schwingung 17 in der Spannung U_{S} oder in dem Strom I_{L}, kann insbesondere berechnet werden. Zu diesem Zweck kann ein mathematisches Modell des Gleichspannungswandlers 1 verwendet werden. Ein solches mathematisches Modell kann beispielsweise Differentialgleichungen bzw. Lösungen für Differentialgleichungen, die den Schwingkreis 16 beschreiben, beinhalten. Das mathematische Modell kann Induktivitäts-, Kapazitäts- und/oder Widerstandsparameter des Gleichspannungswandlers 1 enthalten. Die genannten Parameter können beispielsweise berechnet, geschätzt oder empirisch bestimmt werden, soweit sie nicht bekannt sind. Bei einer Ausführungsform können zur Berechnung des zeitlichen Verlaufs 19 der Schwingung 17 die Eingangsspannung U_{E}, die Ausgangsspannung U_{A}, der Eingangsstrom I_{E} und/oder der Ausgangsstrom I_{A} gemessen und herangezogen werden. Bevorzugt werden zur Berechnung die Eingangsspannung U_{E} und die Ausgangsspannung U_{A} herangezogen.

Die Ursache der Schwingung 17 ist der Schwingkreis 16 bestehend aus dem Induktivitätsbauelement 7 und der parasitären Kapazität C_{P}. Der zeitliche Verlauf 19 der Schwingung 17 weist entsprechend eine Frequenz f_{swing} auf, welche mithilfe der Gleichung ${f}_{swing} = \frac{1}{2 π \sqrt{LC}}$ berechnet wird, wobei L die Induktivität des Induktivitätsbauelements 7 und C die Kapazität der parasitären Kapazität C_{P} bedeutet und Randbedingungen darstellen. Die Schwingung 17 kann mithilfe einer Sinusschwingung angenähert werden, die beginnt, nachdem der Strom I_{L} durch das Induktivitätsbauelement 7 einen Nulldurchgang aufweist. Der zeitliche Verlauf 19 der Schwingung 17 kann dadurch kontinuierlich pro Periode T berechnet werden. Dadurch kann das Schaltmuster 10 in der darauffolgenden Periode T angepasst werden. Zu diesem Zweck können Parameter bzw. Randbedingungen sowie Startwerte (wie beispielsweise das Tastverhältnis D, die Eingangsspannung U_{E}, die Ausgangsspannung U_{A} und/oder der Strom I_{L} durch das Induktivitätsbauelement 7) dem mathematischen Modell vorgegeben werden.

Bei einer Ausführungsform der Erfindung ist vorgesehen, dass nur der Schaltzeitpunkt 14 zum Öffnen des Schalters 9 zeitlich nach vorne oder hinten verschoben wird. Der Schaltzeitpunkt 15 zum Schließen des Schalters 9 bleibt dabei zeitlich unverändert. Dadurch kann auch die Frequenz f bzw. die Periodendauer T des Schaltmusters 10 unverändert beibehalten werden. Durch das zeitliche Verschieben des Schaltzeitpunkts 14 zum Öffnen des Schalters 9 wird auch die Schwingung 17 zeitlich entsprechend verschoben, sodass diese eine andere Phase φ, insbesondere die vorgegebene Phase φₛₒₗₗ, zum Zeitpunkt 15 zum nächsten Schließen des Schalters 9 aufweist.

Nachfolgend wird anhand eines Beispiels beschrieben, wie ein Schaltzeitpunkt 14 zum Öffnen des Schalters 9 zeitlich nach vorne oder hinten verschoben wird, sodass die Schwingung 17 beim Schließen des Schalters eine vorgegebene Phase φₛₒₗₗ und somit der Strom I_{L} durch das Induktivitätsbauelement 7 einen vorgegeben Wert aufweist. Hier wird exemplarisch die vorgegebene Phase φₛₒₗₗ im Bereich nach einem Tiefpunkt der Schwingung 17 festgelegt. Die Festlegung erfolgt beispielsweise zum Zwecke der Erreichung eines besseren Wirkungsgrades (Schaltverluste reduzieren), einer verbesserten Regelung oder eine Kombination davon.

In einem ersten Schritt wird während einer Periode Tₙ unter Zuhilfenahme des mathematischen Modells des Gleichspannungswandlers 1 ermittelt, welche Phase φ, im Folgenden auch als φᵢₛₜ bezeichnet, die Schwingung 17 in dem Strom I_{L} zum Schaltzeitpunkt 15 des Schließens des Schalters 9 am Ende der Periode Tₙ hat. Hierzu wird der zeitliche Verlauf 19 der Schwingung 17 des Stromes I_{L} kontinuierlich berechnet. Die Schwingung 17 beginnt nach einem linearen Abfall und einem anschließenden Nulldurchgang des Stromes I_{L}. Dies ist vollständig in der Periode Tₙ₊₁ dargestellt. Die Berechnung kann beispielsweise in Abhängigkeit von U_{E}, U_{A}, der Kapazität C_{P} und der Induktivität L des Induktivitätsbauelements 7 vorgenommen werden. Der Schaltzeitpunkt 15 zum Schließen des Schalters 9 am Ende und am Anfang jeder Periode T ist zeitlich bekannt und fixiert.

Aus dem zeitlichen Verlauf 19 kann entsprechend in einem zweiten Schritt die Periode bzw. Frequenz einer Schwingung f_{swing} basierend auf den Nulldurchgängen und der Stromrichtung bestimmt werden. In weiterer Folge kann in einem dritten Schritt die Phase φ bzw. φᵢₛₜ zum Schaltzeitpunkt 15 am Ende der Periode ermittelt werden.

Wenn die Phase φᵢₛₜ der Schwingung 17 zum Schaltzeitpunkt 15 am Ende der Periode zum Schließen des Schalters 15 von einer vorgegebenen Phase φₛₒₗₗ abweicht, kann dies in der nächsten Periode Tₙ₊₁ korrigiert werden. Die Korrektur erfolgt derart, dass der Zeitpunkt 14 zum Öffnen des Schalters 9 durch zeitliches Verschieben mithilfe eines Korrekturwerts K (in Fig. 4 bis Fig. 7 zum Zwecke der Zuordnung zu den Perioden T auch mit einem Index n versehen) in der Periode Tₙ₊₁ angepasst wird, wodurch sich auch die Schwingung 17 in ihrer Phase φ verschiebt, da der lineare Abfall des Stromes I_{L} früher oder später beginnt. Der Korrekturwert K verschiebt den Schaltzeitpunkt 14 zum Öffnen des Schalters 9 soweit, dass zum Zeitpunkt 15 am Ende der Periode Tₙ₊₁ zum Schließen des Schalters 9 die Schwingung 17 die vorgegebene Phase φₛₒₗₗ aufweist, also die vorgegebene Phase φₛₒₗₗ der Phase φ entspricht.

Fig. 4 veranschaulicht schematisch die Verschiebung des Schaltzeitpunkts 14 zum Öffnen des Schalters 9. Erkennbar ist in Fig. 4 in Teilbild A, dass zum Schaltzeitpunkt 15 am Ende der Periode Tₙ zum Schließen des Schalters 9 die Phase φ nicht mit der vorgegebenen Phase φₛₒₗₗ übereinstimmt bzw. zusammenfällt, sodass in weiterer Folge der Strom I_{L} auf einen unerwünschten Wert ansteigt. Das hierzu korrespondierende Schaltmuster 10 ist in Fig. 4 in Teilbild B gezeigt. Ebenso ist dies in der Periode Tₙ₊₁ der Fall, da in den Teilbildern A und B der Fig. 4 keine Korrektur erfolgt.

Eine Korrektur ist nun in der Periode Tₙ₊₁ des Schaltmusters 10 anhand der Fig. 4 in Teilbild C und Teilbild D gezeigt. Entsprechend wird der Schaltzeitpunkt 14 des Schaltmusters 10 zum Öffnen des Schalters 9 zeitlich um einen Korrekturwert K - konkret hier der Korrekturwert Kₙ (erhalten aus der Periode Tₙ) - nach vorne geschoben, sodass die Schwingung 17 derart verschoben wird, dass zum Schaltzeitpunkt 15 am Ende der Periode Tₙ₊₁ zum Schließen des Schalters 9 die Schwingung 17 die vorgegebene Phase φₛₒₗₗ aufweist. Die Verschiebung entspricht im Wesentlichen der Differenz zwischen der Phase φₛₒₗₗ und der Phase φᵢₛₜ in der Periode Tₙ, wobei der Korrekturwert K kleiner (beispielsweise halb so groß) als die Differenz ist. Dies ist darauf zurückzuführen, dass die Steigungen von I_{L} von der Spannung abhängig sind. Deshalb kann auch von einer um die mit den Spannungsverhältnissen gewichteten Differenz gesprochen werden.

Da der Korrekturwert K periodisch (bevorzugt jede Periode T) berechnet wird, wird entsprechend während der Periode Tₙ₊₁ der Korrekturwert Kₙ₊₁ für die folgende Periode Tₙ₊₂ berechnet. Wie ersichtlich und beschrieben, ist in der Periode Tₙ₊₁ der Schaltzeitpunkt 15 bei der vorgegebenen Phase φₛₒₗₗ, sodass kein Korrekturwert Kₙ₊₁ für die Periode Tₙ₊₂ erforderlich ist bzw. Null ist.

Zusammengefasst wird das Schaltmuster 10 mit einem Korrekturwert K derart angepasst, dass in der nächsten Periode T des Schaltmusters 10 der Schaltzeitpunkt 15 zum Schließen des Schalters 9 möglichst mit der vorgegebenen Phase φₛₒₗₗ der Schwingung 17 zusammenfällt. Dieser Vorgang kann bevorzugt in jeder Periode T des Schaltmusters 10 wiederholt werden. Dadurch wird gewährleistet, dass die Schwingung 17 zum Schaltzeitpunkt 15 am Ende jeder Periode T möglichst die korrekte Phase, die vorgegebene Phase φₛₒₗₗ, aufweist. Dass das Schließen des Schalters 9 exakt mit der vorgegebenen Phase φₛₒₗₗ zusammenfällt, ist in der Praxis aufgrund von Toleranzen in Bezug auf Bauteile und Abweichungen aus der Berechnung nicht immer gewährleistet, aber ein Ziel der Erfindung. Entsprechend also die Regelvorgabe für die kontinuierliche Berechnung des Korrekturwerts K.

Die Definition von "zusammenfällt" ist in diesem Zusammenhang also derart zu verstehen, dass dies als Regelvorgabe gilt. Demnach ist es zwar möglich, dass der Schaltzeitpunkt 15 mit der vorgegebenen Phase φₛₒₗₗ der Schwingung 17 zusammenfällt (oder mit anderen Worten in der vorgegebenen Phase φₛₒₗₗ der Schwingung 17 der Schalter 9 geschlossen wird), aber definitiv muss dies nicht in jeder Periode T der Fall sein.

Der Korrekturwert K bewirkt außerdem, dass der Tastgrad D der Periode T verändert wird. Entsprechend definiert der Tastgrad D die Dauer, in welcher der Schalter 9 geschlossen ist. Die Dauer der Periode T im Gesamten wird dadurch natürlich nicht verändert.

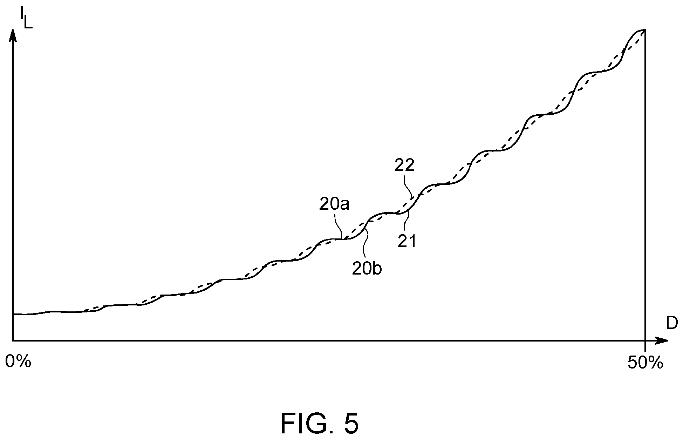

Die zeitlichen Verläufe gemäß Fig. 4 können im Wesentlichen nur einen einzigen Arbeitspunkt für die Regeleinrichtung 13 darstellen. Um die Problematik aller kontinuierlich resultierender Arbeitspunkte anschaulich zu machen, bedarf es einer anderen Darstellungsform, wie im Folgenden anhand von Fig. 5 beschrieben.

Fig. 5 zeigt einen Vergleich von Regelkurven der Regeleinrichtung 13 in Abhängigkeit der mittleren Ausgangsströme I_{A} (gemittelt über mehrere Perioden) und des Tastgrades D. Die Ausgangsströme I_{A} sind dabei der Ordinate zugeordnet. Der Tastgrad D ist auf der Abszisse abgebildet. Im konkreten Fall ist für ein Hochsetzverhältnis von 1:2 ein Tastgrad D von maximal 50% möglich. Im Idealfall läge ein im Wesentlichen quadratischer Zusammenhang (nicht dargestellt) zwischen dem mittleren Ausgangsstrom I_{A} und dem Tastgrad D vor und die Regelkurve hätte einen quadratischen Verlauf. Das heißt aber auch, dass die Regelungseinrichtung 13 mit keinen nichtlinearen Änderungen konfrontiert ist. In der Praxis weist die Regelkurve jedoch Flachstellen 20a und Steilstellen 20b - also nichtlineare Änderungen - auf. Dadurch entstehen Bereiche, in denen die Regeleinrichtung 13 auf starke Abweichungen (nichtlinearen Änderungen) zum Idealfall reagieren muss, wodurch es zu größeren Änderungen des mittleren Ausgangsstromes I_{A} kommt. Dies kann die Regelung des Gleichspannungswandlers 1 erschweren. Eine beispielhafte Regelkurve eines Gleichspannungswandlers aus dem Stand der Technik ist in Fig. 5 mit der Bezugsziffer 21 versehen. Durch das erfindungsgemäße Verfahren können die Flachstellen 20a bzw. Steilstellen 20b in der Regelkurve reduziert (Stromverlauf 22) und dadurch Reaktionen auf nichtlineare Änderungen deutlich reduziert werden. Oder anders ausgedrückt weist die Übertragungsfunktion weniger Nichtlinearitäten auf. Somit wird die Regelung des Gleichspannungswandlers 1 verbessert und es resultiert ein schnelleres Einregelverhalten für den geforderten Ausgangsstrom I_{A}.

Bei einer anderen Ausführungsform der Erfindung ist vorgesehen, dass ein Schaltzeitpunkt 14 zum Öffnen des Schalters 9 zeitlich nach vorne oder hinten verschoben wird, sodass die Schwingung 17 beim Schließen des Schalters 9 eine vorgegebene Phase φₛₒₗₗ und somit die am Schalter 9 abfallende elektrische Spannung U_{S} einen vorgegeben Wert, vorzugsweise einen Minimalwert, insbesondere einen Wert von 0 V, aufweist. Dadurch können die Schaltverluste des Schalters 9 minimiert werden, weil dieser annähernd spannungsfrei schaltet. Der Fokus liegt hier also im Wesentlichen vollständig auf der Verbesserung des Wirkungsgrads. Der Minimalwert liegt dabei im Bereich um 0 V, muss aber entsprechend nicht exakt 0 V betragen.

Der Ablauf zur Berechnung der Korrekturwerts K erfolgt hier wie zu den Fig. 4 beschrieben. Auf eine Wiederholung der Beschreibung wird daher verzichtet.

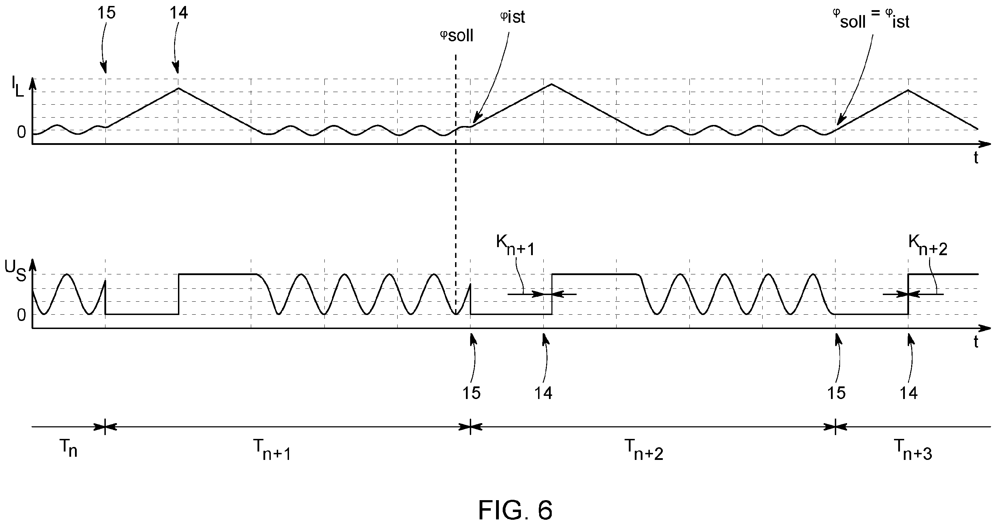

Allgemein ist anzumerken, wenn die Schwingung 17 zum Schaltzeitpunkt 15 zum Schließen des Schalters 9 von einer vorgegebenen Phase φₛₒₗₗ abweicht, insbesondere die Spannung U_{S} kein Betragsminimum aufweist, kann der Zeitpunkt 14 zum Öffnen des Schalters 9 durch zeitliches Verschieben mithilfe eines Korrekturwerts K angepasst werden, wodurch sich auch die Schwingung 17 in ihrer Phase φ verschiebt, sodass beim Schließen des Schalters 9 ein Betrags-Minimum der Spannung U_{S} vorliegt. Dies ist in Fig. 6 am Ende der Periode Tₙ₊₂ veranschaulicht.

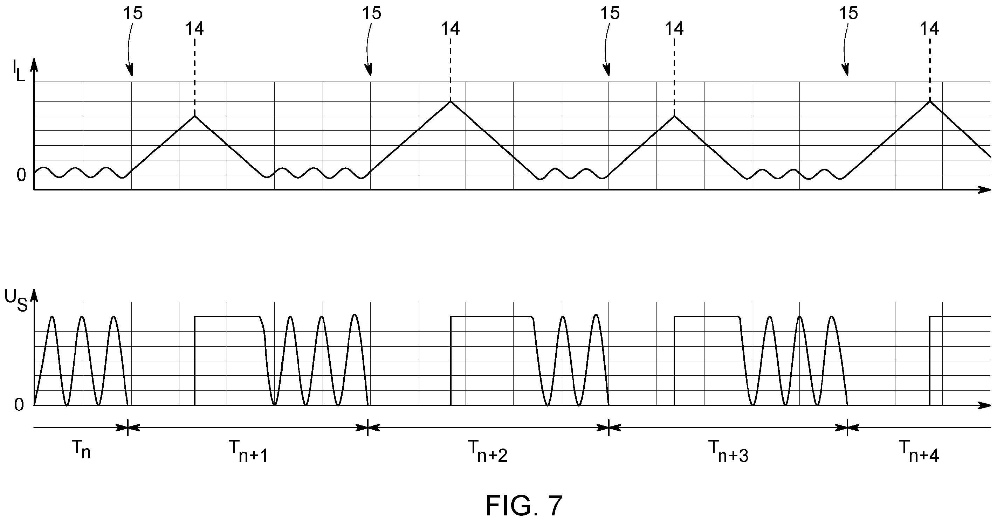

Wenn die vorgegebene Phase φₛₒₗₗ so gewählt wird, dass die Spannung U_{S} ein Betragsminimum aufweist, kann der Strom I_{L}, der mit einer zur Spannung U_{S} phasenversetzten Schwingung 17 behaftet ist, zu hohe oder zu niedrige Werte annehmen. Um dem entgegenzuwirken, kann vorgesehen sein, dass die vorgegebene Phase φₛₒₗₗ der Schwingung 17 in der Spannung U_{S} nur in jeder n-ten Periode des Schaltmusters 10 ident ist, wobei n eine natürliche Zahl ist. Um zu hohe oder niedrige Ströme I_{L} durch das Induktivitätsbauelement auszugleichen, kann vorgesehen sein, für aufeinanderfolgende Perioden T des Schaltmusters 10 unterschiedliche vorgegebene Phasen φₛₒₗₗ zu verwenden, sodass im zeitlichen Mittel ein gewünschter Strom I_{L} angenähert oder erzielt werden kann. Gemäß Fig. 7 ist jede dritte Periode unterschiedlich. Dies kann auch als Skipping bezeichnet werden. Dabei können die vorgegebenen Phasen φₛₒₗₗ in aufeinanderfolgenden Perioden T des Schaltmusters 10 um ein ganzzahliges Vielfaches der Schwingungsperiode versetzt sein, um die Schalterverluste weiterhin zu minimieren. Wie dargestellt, ist entsprechend die vorgegebene Phase φₛₒₗₗ in jeder Periode im Bereich des Spannungsminimums von U_{S} und gleichzeitig wird aufgrund der unterschiedlichen Abklingzeit des Stroms I_{L} der mittlere Strom auf den geforderten Wert geregelt. Damit wird beispielsweise eine Kombination von Verbesserung des Wirkungsgrads und eine Reduzierung der Schaltverluste erreicht bzw. geringerer Fehler des gewünschten mittleren Ausgangsstromes erreicht.

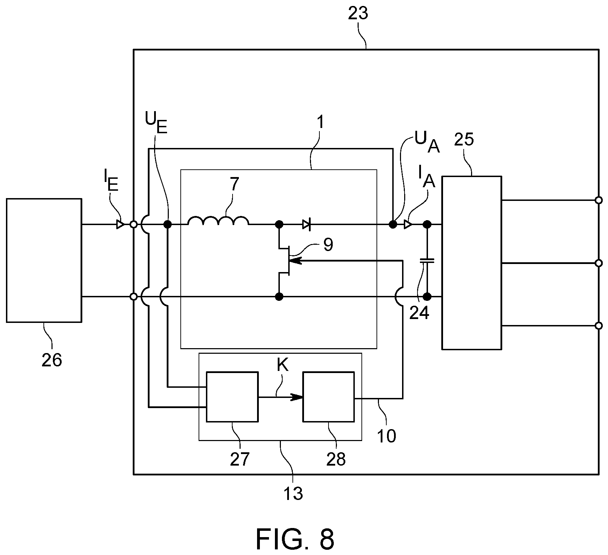

Fig. 8 zeigt einen Wechselrichter 23 mit einem Gleichspannungswandler 1, der einen Zwischenkreiskondensator 24 des Wechselrichters 23 speist. Eine Wechselrichterausgangsstufe 25 mit mehreren elektrischen Wechselrichterschaltern (nicht gezeigt) wandelt die Gleichspannung des Zwischenkreiskondensators 24 in eine Wechselspannung um. Ein solcher Wechselrichter 23 kann beispielsweise an eine Photovoltaikanlage 26 angeschlossen werden und die durch die Photovoltaikanlage 26 gewonnene elektrische Energie in ein Energieversorgungsnetz (nicht gezeigt) einspeisen. Die Regelungseinrichtung 13 kann mithilfe einer Korrekturwertberechnungseinheit 27, wie oben beschrieben, einen Korrekturwert K ermitteln, der das Schaltmuster 10 einer Schaltmustererzeugungseinheit 28 anpasst. Das angepasste Schaltmuster 10 wird anschließend auf den Schalter 9 angewandt. Als Eingangsgröße kann die Regelungseinrichtung 13 den Eingangsstrom I_{E}, die Eingangsspannung U_{E}, den Ausgangsstrom I_{A} und/oder die Ausgangsspannung U_{A} des Gleichspannungswandlers 1 heranziehen. Bevorzugt werden die Eingangsspannung U_{E} und die Ausgangsspannung U_{A} herangezogen. Der Strom I_{L} dient, wie beschrieben, als Basis für die Berechnung des Korrekturwerts K.

## Patentansprüche

1. Verfahren zum Betreiben eines Gleichspannungswandlers (1), nämlich eines Hochsetzstellers (2), der bei einem Wechselrichter (23) eingesetzt wird, wobei der Wechselrichter (23) an eine Photovoltaikanlage (26) angeschlossen ist und der Gleichspannungswandler (1) in einem lückenden Betrieb betrieben wird und folgendes aufweist:
- eine Eingangsseite (3), an der eine Eingangsspannung (U_{E}) anliegt und ein Eingangsstrom (I_{E}) fließt,
- eine Ausgangsseite (4), an der eine Ausgangsspannung (U_{A}) anliegt und ein Ausgangsstrom (I_{A}) fließt,
- zumindest einen ansteuerbaren Schalter (9), der gemäß einem periodischen Schaltmuster (10) mit einer Periodendauer (T) derart geschaltet wird, dass die Eingangsspannung (U_{E}) in die Ausgangsspannung (U_{A}) gewandelt wird und die Ausgangsspannung (U_{A}) einem Ausgangsspannungssollwert entspricht, und
- zumindest ein Induktivitätsbauelement (7),
wobei zumindest eine elektrische Größe des Gleichspannungswandlers, nämlich ein Strom (I_{L}) durch das Induktivitätsbauelement (7), zumindest zeitweise eine Schwingung (17) aufgrund des lückenden Betriebs aufweist, die durch eine Anregung eines aus dem Induktivitätsbauelement (7) und einer parasitären Kapazität (Cₚ) gebildeten Schwingkreises (16) entsteht, wobei die Schwingung (17) beginnt, nachdem der Strom (I_{L}) durch das Induktivitätsbauelement (7) seinen Nulldurchgang erreicht,
wobei ein zeitlicher Verlauf (19) der Schwingung (17) mithilfe eines mathematischen Modells des Gleichspannungswandlers (1) oder Teile des Gleichspannungswandlers (1) berechnet wird und das Schaltmuster (10) auf Basis des berechneten zeitlichen Verlaufs (19) der Schwingung (17) angepasst wird, sodass zumindest ein Schaltzeitpunkt (14, 15) des Schaltmusters (10) mit einer vorgegebenen Phase (φₛₒₗₗ) der Schwingung (17) zusammenfällt, wobei der zumindest eine Schaltzeitpunkt (14, 15) des Schaltmusters (10) unter Beibehaltung der Periodendauer (T) des Schaltmusters (10) angepasst wird,
wobei in der vorgegebenen Phase (φₛₒₗₗ) der Strom (I_{L}) durch das Induktivitätsbauelement (7) einen vorgegebenen Sollwert derart aufweist, dass der Strom (I_{L}) durch das Induktivitätsbauelement (7) zu Beginn eines anschließenden Stromanstiegs mit einer bekannten Steigung zu einem Schaltzeitpunkt (15) zum Schließen des Schalters (9) einen vorgegebenen Wert annimmt,
wobei das Schaltmuster (10) eine Frequenz zwischen 20 kHz und 150 kHz aufweist und durch zeitliches Verschieben eines Schaltzeitpunktes (14) zum Öffnen des Schalters (9) derart angepasst wird, dass der Schalter (9) in der vorgegebenen Phase (φₛₒₗₗ) der Schwingung (17) geschlossen wird.

2. Verfahren nach Anspruch 1, **dadurch gekennzeichnet, dass** die vorgegebene Phase (φₛₒₗₗ) der Schwingung (17) in jeder n-ten Periode des Schaltmusters (8) im Wesentlichen identisch ist, wobei n eine natürliche Zahl ist.

3. Verfahren nach einem der Ansprüche 1 bis 2, **dadurch gekennzeichnet, dass** die vorgegebene Phase (φₛₒₗₗ) ein Nulldurchgang, ein Minimum oder ein Maximum der Schwingung (17) ist.

4. Verfahren nach einem der Ansprüche 1 bis 3, **dadurch gekennzeichnet, dass** der zeitliche Verlauf (19) der Schwingung (17) ein zumindest teilweise zukünftiger zeitlicher Verlauf der Schwingung (17) ist.

5. Verfahren nach einem der Ansprüche 1 bis 4, **dadurch gekennzeichnet, dass** in jeder Periode (T) des Schaltmusters (10) erneut ein zeitlicher Verlauf (19) der Schwingung (17) ermittelt wird.

6. Verfahren nach Anspruch 5, **dadurch gekennzeichnet, dass** eine Dauer des zeitlichen Verlaufs (19) der Schwingung (17) zumindest der Periodendauer (T) des Schaltmusters (10) entspricht.

7. Verfahren nach einem der Ansprüche 1 bis 6, **dadurch gekennzeichnet, dass** auf Basis des zeitlichen Verlaufs (19) der Schwingung (17) ein Korrekturwert (K) ermittelt wird, mit dem der Schaltzeitpunkt (14, 15) des Schaltmusters (10) zeitlich verschoben wird.

8. Verfahren nach einem der Ansprüche 1 bis 7, **dadurch gekennzeichnet, dass** der zeitliche Verlauf (19) der Schwingung (17) ermittelt wird, indem ein zeitlicher Verlauf (19) der elektrischen Größe berechnet wird, der die Schwingung (17) aufweist.

9. Verfahren nach einem der Ansprüche 1 bis 8, **dadurch gekennzeichnet, dass** in der vorgegebenen Phase (φₛₒₗₗ) ein die Schwingung (17) aufweisender Strom, insbesondere ein Strom (I_{L}) durch das Induktivitätsbauelement (7), und/oder eine die Schwingung (17) aufweisende Spannung, insbesondere eine an dem Schalter (9) abfallende elektrische Spannung (Us), einen vorgegebenen Sollwert aufweist.

10. Wechselrichter (23) für eine Photovoltaikanlage (26), wobei der Wechselrichter einen Gleichspannungswandler (1) beinhaltet, nämlich einen Hochsetzsteller (2), der folgendes aufweist:
- eine Eingangsseite (3) für eine Eingangsspannung (U_{E}) und einen Eingangsstrom (I_{E}),
- eine Ausgangsseite (4) für eine Ausgangsspannung (U_{A}) und einen Ausgangsstrom (I_{A}),
- zumindest einen ansteuerbaren Schalter (9),
- zumindest ein Induktivitätsbauelement (7), und
- eine Steuer- und/oder Regelungseinrichtung (13), die dazu eingerichtet ist, den Gleichspannungswandler (1) in einem lückenden Betrieb zu betreiben und den Schalter (9) gemäß einem periodischen Schaltmuster (10) mit einer Periodendauer (T) derart zu schalten, dass die Eingangsspannung (U_{E}) in die Ausgangsspannung (U_{A}) gewandelt wird und die Ausgangsspannung (U_{A}) einem Ausgangsspannungssollwert entspricht,
wobei zumindest eine elektrische Größe des Gleichspannungswandlers (1), nämlich ein Strom (I_{L}) durch das Induktivitätsbauelement (7), im Betrieb des Gleichspannungswandlers (1) zumindest zeitweise eine Schwingung (17) aufgrund des lückenden Betriebs aufweist, die durch eine Anregung eines aus dem Induktivitätsbauelement (7) und einer parasitären Kapazität (C_{P}) gebildeten Schwingkreises (16) entsteht, wobei die Schwingung (17) beginnt, nachdem der Strom (I_{L}) durch das Induktivitätsbauelement (7) seinen Nulldurchgang erreicht, wobei die Steuer- und/oder Regelungseinrichtung (13) dazu eingerichtet ist, einen zeitlichen Verlauf (19) der Schwingung (17) mithilfe eines mathematischen Modells des Gleichspannungswandlers (1) oder Teile des Gleichspannungswandlers (1) zu berechnen und das Schaltmuster (10) auf Basis des berechneten zeitlichen Verlaufs (19) der Schwingung (17) anzupassen, sodass zumindest ein Schaltzeitpunkt (14, 15) des Schaltmusters (10) mit einer vorgegebenen Phase (φₛₒₗₗ) der Schwingung (17) zusammenfällt, wobei in der vorgegebenen Phase (φₛₒₗₗ) der Strom (I_{L}) durch das Induktivitätsbauelement (7) einen vorgegebenen Sollwert derart aufweist, dass der Strom durch das Induktivitätsbauelement (7) zu Beginn eines anschließenden Stromanstiegs mit einer bekannten Steigung zu einem Schaltzeitpunkt (15) zum Schließen des Schalters (9) einen vorgegebenen Wert annimmt,
wobei die Steuer- und/oder Regelungseinrichtung (13) dazu eingerichtet ist, den zumindest einen Schaltzeitpunkt (14, 15) des Schaltmusters (10) unter Beibehaltung der Periodendauer (T) des Schaltmusters (10) anzupassen, wobei das Schaltmuster (10) eine Frequenz zwischen 20 kHz und 150 kHz aufweist und durch zeitliches Verschieben eines Schaltzeitpunktes (14) zum Öffnen des Schalters (9) derart angepasst wird, dass der Schalter (9) in der vorgegebenen Phase (φₛₒₗₗ) der Schwingung (17) geschlossen wird.

## Claims

1. A method for operating a DC-DC converter (1), namely a boost converter (2), which is used in an inverter (23), wherein the inverter (23) is connected to a photovoltaic system (26) and the DC-DC converter (1) is operated in a discontinuous conduction mode and comprises the following:
- an input side (3) at which an input voltage (U_{E}) is present and an input current (I_{E}) flows,
- an output side (4) at which an output voltage (U_{A}) is present and an output current (I_{A}) flows,
- at least one controllable switch (9), which is switched according to a periodic switching pattern (10) having a period (T) such that the input voltage (U_{E}) is converted into the output voltage (U_{A}) and the output voltage (U_{A}) corresponds to an output voltage setpoint, and
- at least one inductive component (7),
wherein at least one electrical variable of the DC-DC converter, namely a current (I_{L}) through the inductive component (7), exhibits, at least temporarily, an oscillation (17) due to the discontinuous conduction mode, which oscillation arises from an excitation of a resonant circuit (16) formed from the inductive component (7) and a parasitic capacitance (Cₚ), wherein the oscillation (17) begins after the current (I_{L}) through the inductive component (7) reaches its zero crossing,
wherein a time profile (19) of the oscillation (17) is calculated by means of a mathematical model of the DC-DC converter (1) or parts of the DC-DC converter (1), and the switching pattern (10) is adapted on the basis of the calculated time profile (19) of the oscillation (17) such that at least one switching instant (14, 15) of the switching pattern (10) coincides with a predetermined phase (φₛₒₗₗ) of the oscillation (17),
wherein the at least one switching instant (14, 15) of the switching pattern (10) is adapted while maintaining the period (T) of the switching pattern (10),
wherein, in the predetermined phase (φₛₒₗₗ), the current (I_{L}) through the inductive component (7) has a predetermined setpoint such that the current (I_{L}) through the inductive component (7) assumes a predetermined value at the beginning of a subsequent current rise with a known slope at a switching instant (15) for closing the switch (9),
wherein the switching pattern (10) has a frequency between 20 kHz and 150 kHz and is adapted by shifting a switching instant (14) for opening the switch (9) in time such that the switch (9) is closed in the predetermined phase (φₛₒₗₗ) of the oscillation (17).

2. The method according to claim 1, **characterized in that** the predetermined phase (φₛₒₗₗ) of the oscillation (17) is substantially identical in every n-th period of the switching pattern (8), wherein n is a natural number.

3. The method according to any one of claims 1 to 2, **characterized in that** the predetermined phase (φₛₒₗₗ) is a zero crossing, a minimum, or a maximum of the oscillation (17).

4. The method according to any one of claims 1 to 3, **characterized in that** the time profile (19) of the oscillation (17) is an at least partially future time profile of the oscillation (17).

5. The method according to any one of claims 1 to 4, **characterized in that** a time profile (19) of the oscillation (17) is determined anew in each period (T) of the switching pattern (10).

6. The method according to claim 5, **characterized in that** a duration of the time profile (19) of the oscillation (17) corresponds at least to the period (T) of the switching pattern (10).

7. The method according to any one of claims 1 to 6, **characterized in that**, on the basis of the time profile (19) of the oscillation (17), a correction value (K) is determined, by means of which the switching instant (14, 15) of the switching pattern (10) is shifted in time.

8. The method according to any one of claims 1 to 7, **characterized in that** the time profile (19) of the oscillation (17) is determined by calculating a time profile (19) of the electrical variable that exhibits the oscillation (17).

9. The method according to any one of claims 1 to 8, **characterized in that**, in the predetermined phase (φₛₒₗₗ), a current exhibiting the oscillation (17), in particular a current (I_{L}) through the inductive component (7), and/or a voltage exhibiting the oscillation (17), in particular an electrical voltage (U_{S}) dropping across the switch (9), has a predetermined setpoint.

10. An inverter (23) for a photovoltaic system (26) wherein the inverter includes a DC-DC converter (1), namely a boost converter (2), which comprises the following:
- an input side (3) for an input voltage (U_{E}) and an input current (I_{E}),
- an output side (4) for an output voltage (U_{A}) and an output current (I_{A}),
- at least one controllable switch (9),
- at least one inductive component (7), and
- a control and/or regulating device (13) configured to operate the DC-DC converter (1) in a discontinuous conduction mode and to switch the switch (9) according to a periodic switching pattern (10) having a period (T) such that the input voltage (U_{E}) is converted into the output voltage (U_{A}) and the output voltage (U_{A}) corresponds to an output voltage setpoint,
wherein at least one electrical variable of the DC-DC converter (1), namely a current (I_{L}) through the inductive component (7), exhibits, during operation of the DC-DC converter (1), at least temporarily an oscillation (17) due to the discontinuous conduction mode, which oscillation arises from an excitation of a resonant circuit (16) formed from the inductive component (7) and a parasitic capacitance (C_{P}), wherein the oscillation (17) begins after the current (I_{L}) through the inductive component (7) reaches its zero crossing, wherein the control and/or regulating device (13) is configured to calculate a time profile (19) of the oscillation (17) by means of a mathematical model of the DC-DC converter (1) or parts of the DC-DC converter (1) and to adapt the switching pattern (10) on the basis of the calculated time profile (19) of the oscillation (17) such that at least one switching instant (14, 15) of the switching pattern (10) coincides with a predetermined phase (φₛₒₗₗ) of the oscillation (17), wherein, in the predetermined phase (φₛₒₗₗ), the current (I_{L}) through the inductive component (7) has a predetermined setpoint such that the current through the inductive component (7) assumes a predetermined value at the beginning of a subsequent current rise with a known slope at a switching instant (15) for closing the switch (9),
wherein the control and/or regulating device (13) is configured to adapt the at least one switching instant (14, 15) of the switching pattern (10) while maintaining the period (T) of the switching pattern (10), wherein the switching pattern (10) has a frequency between 20 kHz and 150 kHz and is adapted by shifting a switching instant (14) for opening the switch (9) in time such that the switch (9) is closed in the predetermined phase (φₛₒₗₗ) of the oscillation (17).

## Revendications

1. Procédé de fonctionnement d'un convertisseur continu-continu (1), à savoir un convertisseur élévateur (2), qui est utilisé dans un onduleur (23), dans lequel l'onduleur (23) est raccordé à une installation photovoltaïque (26) et le convertisseur continu-continu (1) est exploité dans un mode de conduction discontinue et comprend ce qui suit :
- un côté entrée (3) auquel une tension d'entrée (U_{E}) est appliquée et un courant d'entrée (I_{E}) circule,
- un côté sortie (4) auquel une tension de sortie (U_{A}) est appliquée et un courant de sortie (I_{A}) circule,
- au moins un commutateur commandable (9) qui est commuté selon un motif de commutation périodique (10) ayant une période (T) de telle sorte que la tension d'entrée (U_{E}) est convertie en la tension de sortie (U_{A}) et la tension de sortie (U_{A}) correspond à une valeur de consigne de tension de sortie, et
- au moins un composant inductif (7),
dans lequel au moins une grandeur électrique du convertisseur continu-continu, à savoir un courant (IL) traversant le composant inductif (7), présente, au moins temporairement, une oscillation (17) due au mode de conduction discontinue, qui est générée par une excitation d'un circuit oscillant (16) formé par le composant inductif (7) et une capacité parasite (Cₚ), l'oscillation (17) commençant après que le courant (I_{L}) traversant le composant inductif (7) a atteint son passage par zéro,
dans lequel une évolution temporelle (19) de l'oscillation (17) est calculée à l'aide d'un modèle mathématique du convertisseur continu-continu (1) ou de parties du convertisseur continu-continu (1), et le motif de commutation (10) est adapté sur la base de l'évolution temporelle (19) calculée de l'oscillation (17) de telle sorte qu'au moins un instant de commutation (14, 15) du motif de commutation (10) coïncide avec une phase prédéterminée (φₛₒₗₗ) de l'oscillation (17),
dans lequel l'au moins un instant de commutation (14, 15) du motif de commutation (10) est adapté tout en maintenant la période (T) du motif de commutation (10),
dans lequel, dans la phase prédéterminée (φₛₒₗₗ), le courant (I_{L}) traversant le composant inductif (7) présente une valeur de consigne prédéterminée de telle sorte que le courant (I_{L}) traversant le composant inductif (7) prend une valeur prédéterminée au début d'une montée de courant consécutive avec une pente connue à un instant de commutation (15) pour fermer le commutateur (9),
dans lequel le motif de commutation (10) présente une fréquence comprise entre 20 kHz et 150 kHz et est adapté par décalage temporel d'un instant de commutation (14) pour ouvrir le commutateur (9) de telle sorte que le commutateur (9) est fermé dans la phase prédéterminée (φₛₒₗₗ) de l'oscillation (17).

2. Procédé selon la revendication 1, **caractérisé en ce que** la phase prédéterminée (φₛₒₗₗ) de l'oscillation (17) est sensiblement identique dans chaque n-ième période du motif de commutation (8), n étant un nombre entier naturel.

3. Procédé selon l'une des revendications 1 à 2, **caractérisé en ce que** la phase prédéterminée (φₛₒₗₗ) est un passage par zéro, un minimum ou un maximum de l'oscillation (17).

4. Procédé selon l'une des revendications 1 à 3, **caractérisé en ce que** l'évolution temporelle (19) de l'oscillation (17) est une évolution temporelle au moins partiellement future de l'oscillation (17).

5. Procédé selon l'une des revendications 1 à 4, **caractérisé en ce qu'**une évolution temporelle (19) de l'oscillation (17) est déterminée à nouveau dans chaque période (T) du motif de commutation (10).

6. Procédé selon la revendication 5, **caractérisé en ce qu'**une durée de l'évolution temporelle (19) de l'oscillation (17) correspond au moins à la période (T) du motif de commutation (10).

7. Procédé selon l'une des revendications 1 à 6, **caractérisé en ce que**, sur la base de l'évolution temporelle (19) de l'oscillation (17), une valeur de correction (K) est déterminée, au moyen de laquelle l'instant de commutation (14, 15) du motif de commutation (10) est décalé dans le temps.

8. Procédé selon l'une des revendications 1 à 7, **caractérisé en ce que** l'évolution temporelle (19) de l'oscillation (17) est déterminée en calculant une évolution temporelle (19) de la grandeur électrique qui présente l'oscillation (17).

9. Procédé selon l'une des revendications 1 à 8, **caractérisé en ce que**, dans la phase prédéterminée (φₛₒₗₗ), un courant présentant l'oscillation (17), en particulier un courant (I_{L}) traversant le composant inductif (7), et/ou une tension présentant l'oscillation (17), en particulier une tension électrique (U_{S}) chutant aux bornes du commutateur (9), présente une valeur de consigne prédéterminée.

10. Onduleur (23) pour une installation photovoltaïque (26), dans lequel l'onduleur comprenant un convertisseur continu-continu (1), à savoir un convertisseur élévateur (2), qui comprend ce qui suit :
- un côté entrée (3) pour une tension d'entrée (U_{E}) et un courant d'entrée (I_{E}),
- un côté sortie (4) pour une tension de sortie (U_{A}) et un courant de sortie (I_{A}),
- au moins un commutateur commandable (9),
- au moins un composant inductif (7), et
- un dispositif de commande et/ou de régulation (13) configuré pour faire fonctionner le convertisseur continu-continu (1) dans un mode de conduction discontinue et pour commuter le commutateur (9) selon un motif de commutation périodique (10) ayant une période (T) de telle sorte que la tension d'entrée (U_{E}) est convertie en la tension de sortie (U_{A}) et la tension de sortie (U_{A}) correspond à une valeur de consigne de tension de sortie,
dans lequel au moins une grandeur électrique du convertisseur continu-continu (1), à savoir un courant (I_{L}) traversant le composant inductif (7), présente, lors du fonctionnement du convertisseur continu-continu (1), au moins temporairement une oscillation (17) due au mode de conduction discontinue, qui est générée par une excitation d'un circuit oscillant (16) formé par le composant inductif (7) et une capacité parasite (C_{P}), l'oscillation (17) commençant après que le courant (I_{L}) traversant le composant inductif (7) a atteint son passage par zéro, dans lequel le dispositif de commande et/ou de régulation (13) est configuré pour calculer une évolution temporelle (19) de l'oscillation (17) à l'aide d'un modèle mathématique du convertisseur continu-continu (1) ou de parties du convertisseur continu-continu (1) et pour adapter le motif de commutation (10) sur la base de l'évolution temporelle (19) calculée de l'oscillation (17) de telle sorte qu'au moins un instant de commutation (14, 15) du motif de commutation (10) coïncide avec une phase prédéterminée (φₛₒₗₗ) de l'oscillation (17), dans lequel, dans la phase prédéterminée (φₛₒₗₗ), le courant (I_{L}) traversant le composant inductif (7) présente une valeur de consigne prédéterminée de telle sorte que le courant traversant le composant inductif (7) prend une valeur prédéterminée au début d'une montée de courant consécutive avec une pente connue à un instant de commutation (15) pour fermer le commutateur (9),
dans lequel le dispositif de commande et/ou de régulation (13) est configuré pour adapter l'au moins un instant de commutation (14, 15) du motif de commutation (10) tout en maintenant la période (T) du motif de commutation (10), dans lequel le motif de commutation (10) présente une fréquence comprise entre 20 kHz et 150 kHz et est adapté par décalage temporel d'un instant de commutation (14) pour ouvrir le commutateur (9) de telle sorte que le commutateur (9) est fermé dans la phase prédéterminée (φₛₒₗₗ) de l'oscillation (17).
